(19) Europäisches Patentamt / European Patent Office / Office européen des brevets

(11) **EP 3 437 853 B1**

(12) **EUROPÄISCHE PATENTSCHRIFT**

(45) Veröffentlichungstag und Bekanntmachung des Hinweises auf die Patenterteilung:
**20.05.2020   Patentblatt 2020/21**

(21) Anmeldenummer: **18185770.7**

(22) Anmeldetag: **26.07.2018**

(51) Int Cl.:
**B32B 7/06** (2019.01)          **B32B 27/08** (2006.01)
**B32B 27/18** (2006.01)         **B32B 27/30** (2006.01)
**B32B 27/36** (2006.01)         **B65D 65/40** (2006.01)
**C08J 5/18** (2006.01)           **C08J 7/04** (2020.01)
**C08G 63/16** (2006.01)         **C08G 63/181** (2006.01)

(54) **PEELFÄHIGE POLYESTERFOLIE, VERFAHREN ZU IHRER HERSTELLUNG UND IHRE VERWENDUNG**

PEELABLE POLYESTER FILM, METHOD FOR ITS PREPARATION AND THEIR USE

FEUILLES EN POLYESTER PELABLES, LEUR PROCÉDÉ DE FABRICATION ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2017   DE 102017117328**

(43) Veröffentlichungstag der Anmeldung:
**06.02.2019   Patentblatt 2019/06**

(73) Patentinhaber: **Mitsubishi Polyester Film GmbH**
**65203 Wiesbaden (DE)**

(72) Erfinder:
• **Peiffer, Herbert**
**55126 Mainz (DE)**
• **Bartsch, Stefan**
**55116 Mainz (DE)**
• **Jesberger, Martin**
**55128 Mainz (DE)**
• **Rentzsch, Tobias**
**61350 Bad Homburg (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**EP-A1- 1 529 798**

**Beschreibung**

Die Erfindung betrifft eine transparente, peelfähige Polyesterfolie bestehend aus einer biaxial orientierten Basisschicht (B), einer weiteren, auf die Basisschicht (B) aufgebrachten Schicht (C) und einer auf der Basisschicht (B) offline aufgebrachten siegel- und peelfähigen Deckschicht (A). Die Abfolge der Schichten ist (A) (B) (C). Die Deckschicht (A) zeichnet sich durch eine mittlere bis feste Peelbarkeit, insbesondere zu APET und RPET-Menüschalen (APET = amorphes, transparentes Polyethylenterephthalat (PET), RPET = mindestens teilweise recycliertes, amorphes, transparentes PET) aus. Die Deckschicht (A) enthält Polyester auf Basis von aromatischen und aliphatischen Säuren und aliphatischen Diolen. Die Erfindung betrifft weiterhin ein Verfahren zur Herstellung der Folie und ihre Verwendung.

Transparente Menüschalen aus APET oder RPET, die mit einer auf den Rand der Schale unter Temperatureinwirkung aufgesiegelten Folie peelbar verschlossen werden, finden ihren Einsatz insbesondere bei Salaten und frischen Früchten. Wegen ihrer praktischen Handhabung erfreuen sie sich einer großen Beliebtheit. Dies äußert sich beispielsweise darin, dass in Europa die Zuwachsraten für solche Produktlösungen im zweistelligen Prozentbereich liegen.

Salate oder frische Früchte werden nach ihrer Zubereitung in Menüschalen (engl. trays) eingefüllt. Auf den Rand der Menüschale wird eine Folie heißgesiegelt, die die Verpackung verschließt und das Fertiggericht gegen äußere Einflüsse schützt.

Die Heißversiegelung der transparenten Menüschalen aus APET oder RPET erfolgt bei Siegeltemperaturen im Wesentlichen zwischen 110 und 150 °C. Um die Wirtschaftlichkeit zu gewährleisten, ist die Siegelzeit in der Regel kleiner als eine Sekunde. Bei höheren Siegeltemperaturen als 150 °C sind die APET-, insbesondere aber die RPET-Menüschalen, nicht mehr formstabil, sie neigen zum Verziehen.

Höhere Siegeltemperaturen (> 135 bis 150 °C) können bei hochwertigen Menüschalen aus größtenteils Regenerat freiem APET mit Wanddicken von ca. 200 $\mu$m und mehr angewendet werden. Niedrige Siegeltemperaturen (< 135 °C) werden insbesondere angewendet, wenn die Menüschalen Wandstärken von ca. 200 $\mu$m und weniger und einen hohen Regeneratanteil aufweisen. Für die letztgenannten Menüschalen wird häufig die Abkürzung RPET verwendet.

Unabhängig von der angewandten Siegeltemperatur wird von der Packung - auch nach Lagerung im Kühlschrank oder in der Gefriertruhe - gefordert, dass die aufgesiegelte Folie einwandfrei unter Aufwendung einer spürbaren Kraft von der Menüschale abgezogen werden kann, ohne dabei einzureißen. Dieses Verhalten wird mit "cold peel" bezeichnet.

Die Folie gemäß der vorliegenden Erfindung ist zu Menüschalen aus APET oder RPET heißsiegelbar und peelfähig. Bei gegebenem Material und gegebener Dicke der Folie werden die Siegelbarkeit und die Peelfähigkeit der Folie hauptsächlich von den Eigenschaften der Deckschicht (A), die auf der Menüschale gesiegelt ist, bestimmt.

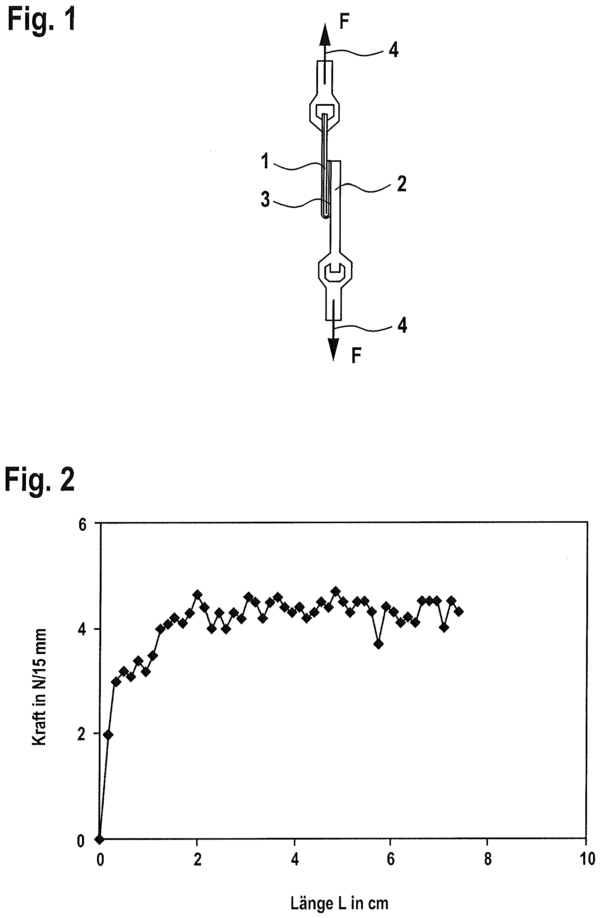

Die Peelfähigkeit von Folien lässt sich labormäßig einfach mit einem Spannungs-Dehnungstester (z.B. Zwick) feststellen (vgl. Figur 1). Für diesen Test werden aus der Folie und der Menüschale jeweils 15 mm breite und ca. 50 mm lange Streifen ausgeschnitten und gegeneinander gesiegelt. Die Siegelschicht der Folie bildet die Deckschicht (A) und die Siegelschicht der Menüschale die innen liegende Schicht der Schale. Die gesiegelten Streifen werden - wie die Figur zeigt - in die Kluppen des Testers eingespannt. Der "Winkel" zwischen der in der oberen Kluppe eingespannten Folie und dem Menüschalenstreifen beträgt 180°. Beim Test werden die Kluppen des Testers mit einer Geschwindigkeit von 200 mm/min auseinandergefahren, wobei die Folie von der Menüschale vollständig abgeschält werden soll, ohne dabei einzureißen oder zu reißen.

Eine peelfähige Folie wird erhalten, wenn die Zug- oder die Schälkraft (in N/15 mm Folienbreite) bis zu einem bestimmten Wert/Plateau ansteigt und dann über die Strecke, über die die beiden Streifen miteinander gesiegelt sind, in etwa konstant bleibt (vgl. Figur 2). Die Folie reißt nicht ein, sondern lässt sich wie gewünscht von der Menüschale mit definiertem Kraftaufwand abschälen (engl. peelen).

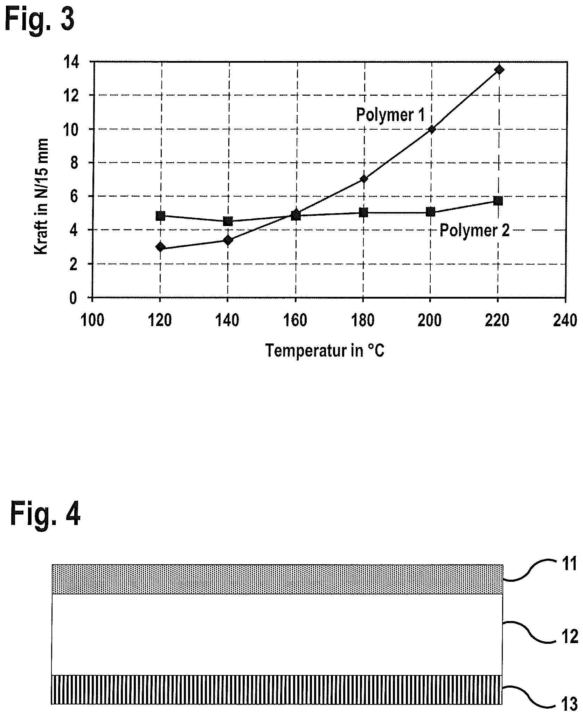

Die Höhe der Peelkraft (N/15 mm Folienstreifenbreite) wird maßgeblich von den in der Deckschicht (A) verwendeten Polymeren bestimmt (vgl. Figur 3, Polymer 1 im Vergleich zu Polymer 2). Daneben ist die Höhe der Peelkraft z.B. abhängig von der Dicke der Deckschicht (A), der angewandten Heißsiegeltemperatur und der Heißsiegelzeit, sowie dem Druck zwischen den Siegelbacken.

Die Peelkraft kann beispielsweise mit der Heißsiegeltemperatur stark ansteigen (vgl. Figur 3, Polymer 1). Mit zunehmender Heißsiegeltemperatur wächst dabei die Gefahr, dass die Siegelschicht (A) ihre Peelfähigkeit verliert. D.h., eine Folie, die bei Anwendung einer geringen Heißsiegeltemperatur peelfähig ist, verliert diese Eigenschaft, wenn eine entsprechend hohe Heißsiegeltemperatur angewendet wird. Diesem für die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl. Polymer 2 in Figur 3). In der Praxis beträgt dieser Temperaturbereich im Allgemeinen 110 bis 150 °C, bevorzugt 112 bis 150 °C und besonders bevorzugt 115 bis 150 °C. Hierbei finden definierte Bedingungen, insbesondere der Siegelzeiten ($\leq$ 1s) und der Anpressdrücke Anwendung.

Die heißsiegelbare und peelfähige Schicht (A) wird mittels offline-Technologie in einem zusätzlichen, der Folienherstellung nachgeordneten Prozessschritt auf die Polyesterfolie (B) aufgebracht. Bei dieser Methode wird zunächst eine Polyesterfolie (B) mit definierten Eigenschaften nach üblichen Verfahren hergestellt. Die so hergestellte Polyesterfolie (B) wird dann in einem weiteren Verarbeitungsschritt in einer Beschichtungsanlage "offline" mit der heißsiegelbaren und peelfähigen Schicht (A) beschichtet.

Bei diesem Verfahren wird das Polymer für die Schicht (A) in einem organischen Lösungsmittel aufgelöst, bzw. dispergiert. Die fertige Lösung/Dispersion wird über ein geeignetes Antragsverfahren (z.B. Messergießer (Rakel), Raster- oder Gravurwalze, Düse) auf die Folie appliziert. Danach wird in einem Trockenofen das Lösungsmittel verdunstet und das peelfähige Polymer bleibt als feste, peelfähige Schicht (A) auf der Folie zurück.

Auf dem Markt werden nach dem aktuellen Stand verschiedene heißsiegelbare und peelfähige Polyesterfolien angeboten. Die Folien unterscheiden sich z.B. im Aufbau und in der Zusammensetzung der Deckschicht (A). Sie gelangen entsprechend ihrer Peel-Eigenschaften in unterschiedliche Anwendungen.

Es ist z.B. üblich, die Folien von Seiten der Anwendung in Folien mit leichter Peelbarkeit (easy peel), mit mittelfester Peelbarkeit (medium peel) und mit starker Peelbarkeit (strong peel) zu unterteilen. Wesentliches quantifizierbares Unterscheidungsmerkmal zwischen diesen Folien ist die Höhe der jeweiligen Peelkraft entsprechend Figur 2. Eine Einteilung wird an dieser Stelle wie folgt vorgenommen

| Leichte Peelbarkeit (easy peel) | Peelkraft im Bereich von ungefähr 2 bis 3 N je 15 mm Streifenbreite |
|---|---|
| Mittelfeste Peelbarkeit (medium peel) | Peelkraft im Bereich von ungefähr 3 bis 7 N je 15 mm Streifenbreite |
| Starke, widerstandsfähige Peelbarkeit (strong peel) | Peelkraft im Bereich von mehr als 7 N je 15 mm Streifenbreite |

Wichtiges Kriterium hierbei ist, dass beim Abziehen der Folie von der Menüschale die Folie nicht einreißen oder anreißen darf. Die peelfähige Polyesterfolie muss als Ganzes von der Menüschale zu entfernen sein, ohne das z.B. Reste der Trockenmasse der Beschichtung auf dem Rand der Menüschale zurückbleiben. Dieser Punkt ist u.a. beim Befüllen der Schalen wichtig, da in regelmäßigen Abständen das Peelverhalten bei der Befüllung der Menüschalen geprüft und das befüllte Gut erneut versiegelt wird. Die Schale mit Inhalt kann dann trotz "zerstörender" Qualitätskontrolle weiter verwendet werden, indem diese erneut einwandfrei versiegelt werden kann. Diese "Reworkability" ist für die Wirtschaftlichkeit des Produkts sehr wichtig und entscheidet oftmals über die Auswahl der Folien.

Vom Markt werden weiterhin hohe optische Anforderungen an die peelfähige Polyesterfolie gestellt; insbesondere hinsichtlich einer Trübung von < 20 % und einer "Clarity" von > 80 %, damit man das Füllgut (z.B. den frischen Salat oder das Obst) deutlich erkennen kann. Darüber hinaus ist aus den gleichen Gründen eine gute Antibeschlagwirkung der peelfähigen Polyesterfolie wünschenswert.

Siegelbare und peelfähige PET-Folien sind bekannt.

In der EP 1 475 228 B1 wird eine coextrudierte, peelfähige, biaxial orientierte Polyesterfolie mit einer Basisschicht und mindestens einer auf dieser Basisschicht aufgebrachten Deckschicht beschrieben. Die Deckschicht ist heißsiegelbar und zeichnet sich durch eine leichte bis feste Peelbarkeit, insbesondere zu APET/CPET-Menüschalen aus. Die Deckschicht enthält Polyester auf Basis von aromatischen und aliphatischen Säuren und aliphatischen Diolen. Des Weiteren enthält die Deckschicht ein mit Polyester unverträgliches Polymer in einer bestimmten Konzentration. Die Folie ist in ihrem Peelverhalten gegenüber APET-Menüschalen verbesserungswürdig.

In der WO 2015/148685 A1 wird eine Beschichtungsmischung beansprucht, die in einem Lösungsmittel gelöst ist und die auf einer Oberfläche von einem Verpackungsfilm angewendet wird. Die Beschichtungsmischung umfasst die folgenden Bestandteile: Ein Lösungsmittel, ein Heißsiegelpolymer aus einem amorphen oder halbkristallinen Polyester oder Copolyester mit einer Glasübergangstemperatur zwischen -35 und 0 °C und einem "Ring und Ball" Erweichungspunkt zwischen 60 und 120 °C, wobei das Polymer in den genannten Lösungsmitteln löslich ist und Antiblockadditive enthält. Wenn die Mischung auf einem Film beschichtet und getrocknet wird, stellt sie eine heißsiegelfähige Beschichtung dar, die auf Form-, Füll- und Siegelmaschinen bei niedrigen Temperaturen verarbeitet werden kann. Folien nach dieser Erfindung neigen bei Lagerung der Wickel dazu, infolge der niedrigen Glasübergangstemperatur mit sich selber zu versiegeln. Sie lassen sich damit nicht ohne Beschädigung von dem Wickel abziehen.

In der WO 2016/083521 A1 wird eine biaxial orientierte Polyesterfolie beansprucht, die aus einem Polyesterfilm und einer heißsiegelbaren Beschichtung besteht. Die heißsiegelbare Beschichtung enthält ein oder mehrere amorphe Copolyester auf Basis von Einheiten aus Terephthalsäure, Naphthalindicarbonsäure und mindestens ein Diol, wobei die heißsiegelbare Beschichtung 20 bis 50 Gew.-% Terephthalsäure-Einheiten und 5 bis 25 Gew.-% Naphthalindicarbonsäure-Einheiten enthält. Die Polyesterfolie besitzt ein hohes Rissverhältnis gebildet aus der Rissbildungskraft gemessen nach ASTM D-1004 und der totalen Foliendicke von mindestens 37 gf/$\mu$m in mindestens einer der beiden Orientierungsrichtungen. Die Folie ist heißsiegelbar und peelfähig gegenüber Behälter aus Polyester und Aluminium. Die Folie ist in ihrem Peelverhalten gegenüber APET-, insbesondere gegenüber RPET- Menüschalen verbesserungswürdig. Das Peelverhalten der Folie gegenüber den genannten Materialien ist zu schwach (easy peel).

In der EP 2 431 176 B1 wird eine coextrudierte, peelfähige Polyesterfolie mit einer Substratschicht und mindestens einer auf dieser Substratschicht aufgebrachten, heißsiegelbaren Schicht beschrieben. Die heißsiegelfähige Schicht umfasst

i. einen Copolyester aus Adipinsäure und Terephthalsäure und aliphatischen Glycol, wobei die relativen Molverhältnisse von Adipinsäure/Terephthalsäure/alipahatischem Glycol im Bereich 30-70/70-50/100 liegen und der Copolyester mindestens 90 Gew.-des Gesamtgewichts der heißsiegelfähigen Schicht ausmacht
ii. die heißsiegelfähige Schicht im Bereich von 0,3 bis etwa 3 $\mu$m liegt,
iii. die Dicke der heißsiegelfähige Schicht ein oder mehrere Wachse umfasst.

Die Folie ist in ihrem Peelverhalten gegenüber APET-Meniischalen, insbesondere bei niedrigen Temperaturen, verbesserungswürdig. Folien nach dieser Erfindung neigen bei Lagerung der Wickel bei erhöhter Temperatur dazu, infolge der niedrigen Glasübergangstemperatur mit sich selbst zu versiegeln.

In der EP-A 1 529 798 wird eine coextrudierte, transparente, biaxial orientierte Polyesterfolie beschrieben, welche eine Basisschicht (B) und eine heißsiegelbare und zumindest gegenüber Polyester (APET und /oder CPET) peelfähige ebenfalls coextrudierte Deckschicht (A) aufweist, wobei die Deckschicht (A) 60 bis 99 Gew.-% Polyester enthält, der zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen. Der Polyester der Deckschicht (A) wird im Extruder aus zwei unterschiedlichen Polyestern I und II gemischt. Die heißsiegelbare und peelfähige Deckschicht (A) zeichnet sich durch eine Siegelanspringtemperatur (= Mindestsiegeltemperatur) gegenüber CPET oder der APET-Seite von APET/CPET-Menüschalen von nicht mehr als 165 °C sowie eine maximale Siegeltemperatur von 220 °C aus.

Aufgabe der vorliegenden Erfindung war es, eine mit einer offline-Beschichtung versehene, heißsiegelbare und peelfähige, biaxial orientierte Polyesterfolie zur Verfügung zu stellen, die sich durch hervorragende Siegel- und Peeleigenschaften gegenüber Menüschalen auszeichnet, insbesondere gegenüber Menüschalen, die aus APET oder RPET bestehen und die Nachteile des Standes der Technik nicht aufweisen. Sie soll sich insbesondere durch die folgenden Punkte/Eigenschaften auszeichnen

Sie soll gegenüber APET- oder RPET -Menüschalen eine mittelfeste Peelbarkeit (medium peel) zeigen. Die Peelkraft soll im Bereich von 3 bis 7 N/15mm liegen.

Die heißsiegelbare und peelfähige Schicht soll gegenüber APET- oder RPET-Menüschalen eine Mindestsiegeltemperatur von 110 °C aufweisen, wobei die maximale Siegeltemperatur im Allgemeinen ca. 160 °C beträgt (bei 0,5 s Siegelzeit und einem definierten Anpressdruck (s. Messmethoden weiter unten)).

Die Folie soll sich wirtschaftlich herstellen lassen. Dies bedeutet beispielsweise, dass zur Herstellung der Basisfolie (Schicht B) in der Industrie übliche Verfahren eingesetzt werden können.

Die optischen Eigenschaften der Folie sollen sehr gut sein. Dies bedeutet beispielsweise eine Trübung von kleiner als 20 %, eine Clarity von größer als 80 % und eine Transparenz von größer als 90 %.

Das Wickelverhalten und die Verarbeitbarkeit der Folie, insbesondere bei der Beschichtung, bei der Bedruckung, nach dem Transport bei erhöhten Temperaturen (z.B. beim Transport, wo Temperaturen größer 50 °C auftreten können), bei der Kaschierung oder bei der Siegelung der beschichteten Folie gegen die Menüschale soll gut sein.

Insbesondere soll sich die Folie gut auf- und abwickeln lassen. Beim Abwickeln der Folien dürfen die einzelnen Folienlagen nicht aneinander haften, auch nicht bei erhöhter Temperatur, z.B. 50 oder 60 °C. Eine erhöhte Haftung zwischen den einzelnen Folienlagen würde die Abwicklung der Folie erschweren oder gar unmöglich machen (z.B. Beim Schneiden der Mutterrolle in kleinere Schnittrollen oder beim Abwickeln der Schnittrolle beim Endkunden).

Außerdem soll dafür Sorge getragen werden, dass die Folie auf schnelllaufenden Maschinen verarbeitet werden kann. Es sollen sich dabei gleichzeitig die ausgezeichneten Eigenschaften der eingesetzten biaxial orientierten Polyesterfolie nicht verschlechtern. Hierzu gehören insbesondere die mechanischen Eigenschaften der Folie. Der E-Modul der beschichteten Folie sollte größer als 3000 N/mm$^2$ sein und der Schrumpf der beschichteten Folie sollte nicht größer als 2,5 % sein.

Gelöst wird die Aufgabe durch die Bereitstellung einer transparenten peelfähigen Polyesterfolie umfassend eine biaxial orientierte Polyesterfolie (B), die eine erste und eine zweite Oberfläche aufweist, eine weitere, auf der ersten Oberfläche der Basisschicht (B) aufgebrachte Schicht (C) und eine auf der zweiten Oberfläche der Basisschicht (B) aufgebrachte heißsiegelbare und gegenüber APET- und RPET- Menüschalen peelfähige Deckschicht (A), wobei die heißsiegelbare und peelfähige Deckschicht (A) eine offline Beschichtung darstellt und aus

a) 85 - 99 Gew.-% Polyester und

b) 1-15 Gew.-% weitere Substanzen besteht, wobei

der Polyester aus 25-95 Mol-% an Einheiten aufgebaut ist, die auf mindestens eine aromatische Dicarbonsäure und 5-75 Mol-% an Einheiten, die auf mindestens eine aliphatische Dicarbonsäure zurückgehen, wobei die Summe der dicarbonsäureabgeleiteten Molprozente 100 ergibt und der Polyester aus mindestens 10 Mol-% an Einheiten aufgebaut ist, die auf lineare oder verzweigte Diole mit größer als 2 C-Atomen zurückgehen, wobei die Summe der Diol-Komponenten 100 Molprozente ergibt und die Schicht (C) vernetzte Acrylat- und/oder Methacrylat- basierte Copolymere umfasst.

Im Vorstehenden wie im Folgenden bezieht sich Gew.-%, sofern nichts anderes erwähnt, immer auf die jeweilige Schicht oder das jeweilige System in dessen Zusammenhang die Angabe genannt ist.

Der erfindungsgemäße Schichtaufbau ist in Figur 4 dargestellt. Die Folie ist zumindest dreischichtig aufgebaut. Eine solche dreischichtige Folie besteht aus der Basisschicht (B), die zwei Oberflächen, eine erste und eine zweite Oberfläche, aufweist. Auf der ersten Oberflächen der Basisschicht (B) (12) ist die Schicht (C) aufgebracht (11) und der auf zweiten Oberfläche der Basisschicht (B), die der Schicht (C) abgewandt ist, ist durch Offline-Beschichtung eine heißsiegelbare und peelfähige Deckschicht (A) aufgebracht (13). Die Schichtabfolge ist folglich (A) (B) (C).

Die Gesamtdicke der erfindungsgemäßen peelfähigen Polyesterfolie kann innerhalb bestimmter Grenzen variieren. Sie beträgt 3 bis 200 $\mu$m, insbesondere 4 bis 150 $\mu$m, vorzugsweise 5 bis 100 $\mu$m, wobei die Schicht (B) einen Anteil von vorzugsweise 45 bis 97 % an der Gesamtdicke hat.

## Heißsiegelbare und peelfähige Deckschicht (A)

Die offline auf die biaxial orientierte Polyesterfolie = Basisschicht (B) aufgebrachte siegelbare und peelfähige Deckschicht (A) besteht überwiegend, d.h. zu mindestens 85 Gew.-% aus einem Peel-Polyester. Der Peel-Polyester umfasst Polyester, die aus Einheiten, die von aromatischen und aliphatischen Dicarbonsäuren abgeleitet sind, aufgebaut sind.

Die auf die aromatischen Dicarbonsäuren zurückgehenden Einheiten sind in dem Peel-Polyester in einer Menge von 25-95 Mol-%, bevorzugt 40-90 Mol-%, besonders bevorzugt 50-88 Mol-% enthalten. Die auf die aliphatischen Dicarbonsäuren zurückgehenden Einheiten sind im Peel-Polyester in einer Menge von 5-75 Mol-%, bevorzugt 10-60 Mol-%, besonders bevorzugt 12-50 Mol-% enthalten, wobei die Mol-%-Angaben sich immer zu 100 % ergänzen. Das Abweichen von den o.g. erfindungsgemäßen Verhältnissen an aromatischen und aliphatischen Diacarbonsäuren führt z.B. zu einer nicht ausreichenden Haftung der Deckschicht (A) an der Basisschicht (B) (bei zu geringem Anteil an aromatischen Dicarbonsäuren) oder zu einer nicht erfindungsgemäßen Peel-Kraft bzw. Siegelanspringtemperatur (= Mindestsiegeltemperatur).

Die erfindungsgemäßen Peel-Polyester können sowohl Mischungen (Blends) aus Homopolyestern als auch Copolyestern sowie Mischungen aus Co- und/oder Homopolyestern sein. Bevorzugt werden dabei Blends aus Homo- und Copolyestern oder Blends aus verschiedenen Copolyestern auf Basis von aromatischen und aliphatischen Dicarbonsäuren und aliphatischen Diolen.

Beispiele für die erfindungsgemäß einsetzbaren aromatischen Dicarbonsäuren, die als abgeleitete Einheiten in dem Peel-Polyester vorhanden sein können, sind die Terephthalsäure, die Isophthalsäure, die Phthalsäure und die 2,6 Naphthalindicarbonsäure. Bevorzugt werden Terephthalsäure und Isophthalsäure.

Beispiele für die erfindungsgemäß einsetzbaren aliphatischen Dicarbonsäuren, die als abgeleitete Einheiten in dem Peel-Polyester vorhanden sein können, sind die Bernsteinsäure, die Glutarsäure, die Adipinsäure, die Pimelinsäure, die Korksäure, die Azelainsäure und die Sebazinsäure. Bevorzugt werden Azelainsäure, Sebazinsäure und Adipinsäure.

Beispiele für die erfindungsgemäß einsetzbaren aliphatischen Diole, die als abgeleitete Einheiten in dem Peel-Polyester vorhanden sein können, sind Ethylenglykol, 1,3-Propandiol, 1,3-Butandiol, 1,4-Butandiol, 1,5-Pentandiol, 2,2-Dimethyl-1,3-Propandiol, Diethylenglykol, Triethylenglycol, 1,4-Cyclohexandimethanol und Neopentylglykol. Bevorzugt sind Ethylenglykol, Diethylenglykol, 1,2 Propandiol, Butandiol und Neopentylglykol.

Im Allgemeinen beinhaltet der Peel-Polyester die folgenden, von "Dicarbonsäure abgeleiteten Einheiten" und zum Anderen von "Diol abgeleiteten Einheiten", jeweils bezogen auf die gesamte Menge an Dicarbonsäure-basierten - bzw. Diol-basierten Wiederholungseinheiten

- 25 bis 85 Mol-%, bevorzugt 30 bis 80 Mol-% und besonders bevorzugt 35 bis 70 Mol-% Terephthalat
- 5 bis 50 Mol-%, bevorzugt 10 bis 45 Mol-% und besonders bevorzugt 15 bis 40 Mol-% Isophthalat
- 5 bis 50 Mol-%, bevorzugt 5 bis 40 Mol-% und besonders bevorzugt 5 bis 30 Mol-% Adipat
- 0 bis 30 Mol -%, bevorzugt 0 bis 20 Mol-% und besonders bevorzugt 0 bis 10 Mol-% Azelat
- 5 bis 50 Mol-%, bevorzugt 5 bis 40 Mol-% und besonders bevorzugt 5 bis 30 Mol-% Sebazat
- Mehr als 10 Mol -%, bevorzugt mehr als 11 Mol-% und besonders bevorzugt mehr als 12 Mol-% Ethylenglykol

- Ein oder mehrere Diole ausgewählt aus der Gruppe $C_3$ bis $C_7$ - Diolen, Di-, Tri- oder Tetra- $C_2$ bis $C_4$-Alkylen-Glykole, sowie Kombinationen hieraus, in Mengen von größer 10 Mol-%. Unter $C_3$ bis $C_7$ - Diolen werden insbesondere verstanden: Propylen-, Butylen- und Neopentylglycol. Unter den Di- bis Tetra-Alkylenglykolen insbesondere: Diethylenglykol, Triethylenglycol oder Dipropylenglykol.

Erfindungsgemäß liegt die Glasübergangstemperatur $T_g$ des Peel-Polyesters der Deckschicht (A) zwischen 0 und 30 °C. Bevorzugt liegt sie zwischen 0 und 27 °C und besonders bevorzugt zwischen 0 und 25 °C. Ist die $T_g$ des Polyesters kleiner als 0 °C, so kann die Folie nicht verfahrenssicher weiterverarbeitet werden. Die Klebeneigung (Haftung) der Deckschicht (A) gegenüber sich selbst und gegenüber der anderen Seite der Peel-Folie ist so groß, dass sie beim Wickeln verblockt und nicht mehr weiterverarbeitet werden kann. Der Wickel verklebt, was mit häufigen Folienabrissen, insbesondere beim Abwickeln, der Folie verbunden ist. Ist andererseits die $T_g$ größer als 30 °C, so ist insbesondere das gewünschte Peelen der Deckschicht (A) bei den niedrigen Siegeltemperaturen (Mindestsiegeltemperatur 110 °C) nicht mehr gegeben. Außerdem neigt die Folie beim Abziehen von der Menüschale vermehrt zum Ein- oder zum Abreißen, was unerwünscht ist. Die erfindungsgemäßen Siegel- und Glasübergangstemperaturen werden durch das Einhalten der erfindungsgemäßen Zusammensetzung des Peel-Polyesters (siehe oben) erhalten.

Erfindungsgemäß liegt der SV-Wert des Peel-Polyesters der Deckschicht (A) zwischen 200 und 2000. Bevorzugt liegt der SV-Wert zwischen 250 und 1900 und besonders bevorzugt zwischen 300 und 1900. Ist der SV-Wert kleiner als 200, so kann die geforderte Siegelnahtfestigkeit der Deckschicht (A) von 3 bis 7 N/15 mm im erfindungsgemäßen Temperaturbereich gegen APET- oder RPET-Menüschalen nicht mehr eingehalten werden. Die Peelkraft ist zu schwach. Ist andererseits der SV-Wert größer als 2000, so ist der Polyester zu viskos und kann z.B. nicht vernünftig in Lösung gebracht oder im Lösungsmittel dispergiert werden. Die Ermittlung des SV-Werts muss dabei analog zu dem im Methodenteil vorgestellten Verfahren erfolgen.

Des Weiteren liegt die Masse der trockenen Deckschicht (A) der erfindungsgemäßen Folie liegt im Bereich von 1 bis 8 g/m$^2$, bevorzugt im Bereich von 1,2 bis 8 g/m$^2$ und besonders bevorzugt im Bereich von 1,4 bis 8 g/m$^2$. Beträgt das Antragsgewicht der Deckschicht (A) mehr als 8 g/m$^2$, so wächst die Peelkraft deutlich an und liegt nicht mehr im erfindungsgemäßen Bereich. Darüber hinaus wird das Peelverhalten der Folie beeinträchtigt, die Folie reißt beim Abziehen von der Menüschale vermehrt ein. Beträgt es dagegen weniger als 1 g/m$^2$, so ist die Folie im erfindungsgemäßen Temperaturbereich nicht mehr heißsiegelbar und peelfähig.

1 bis zu 15 Gew.-% des Materials der Deckschicht (A) besteht aus weiteren Substanzen wie Partikeln, Additiven, Hilfsmitteln und/oder sonstigen in der Polyesterfolientechnologie üblicherweise verwendeten Zusatzstoffen. Als mögliche weitere Zusatzstoffe für die Deckschicht (A) werden Antiblockmittel, Gleitmittel, insbesondere aber geeignete Antifogmittel eingesetzt, die in bestimmten Konzentrationen dem Peel-Polyester, bzw. der Lösung - bestehend aus Peel-Polyester, inklusive weiterer Substanzen und Lösemittelzugegeben werden.

Die Deckschicht (A) zeichnet sich durch charakteristische Merkmale aus. Sie besitzt eine Siegelanspringtemperatur (= Mindestsiegeltemperatur) gegenüber APET- und RPET-Menüschalen von nicht mehr als 115 °C, bevorzugt nicht mehr als 112 °C und besonders bevorzugt nicht mehr als 110 °C und eine Siegelnahtfestigkeit (= Peel-Kraft) gegenüber APET- und RPET - Menüschalen von mindestens 3,0 N), bevorzugt mindestens 3,1 N, besonders bevorzugt mindestens 3,2 N (jeweils bezogen auf 15 mm Folienbreite). Die Deckschicht (A) hat gegenüber APET- und RPET-Menüschalen eine max. Siegeltemperatur von ca. 160 °C, bevorzugt 155 °C und besonders bevorzugt 150 °C, wobei im gesamten Siegelbereich von 110 bis 160 °C eine gegenüber APET- und RPET- Menüschalen peelfähige Folie erhalten wird.

Für die bevorzugten, oben angegebenen Bereiche lassen sich die Peelkräfte zahlenmäßig beschreiben. Entsprechend den vorliegenden Untersuchungen können die Peelkräfte nach der vorliegenden Erfindung durch den folgenden Zusammenhang zwischen der Siegeltemperatur $\vartheta$ (in °C) und der Peelkraft *F* (in N/15mm) miteinander korreliert werden.

$$0{,}018 \bullet \vartheta / °C + 1 \leq Peelkraft \quad F / N\, je\, 15mm \leq 0{,}03 \bullet \vartheta / °C + 2{,}5$$
$$120 \leq \vartheta / °C \leq 150$$

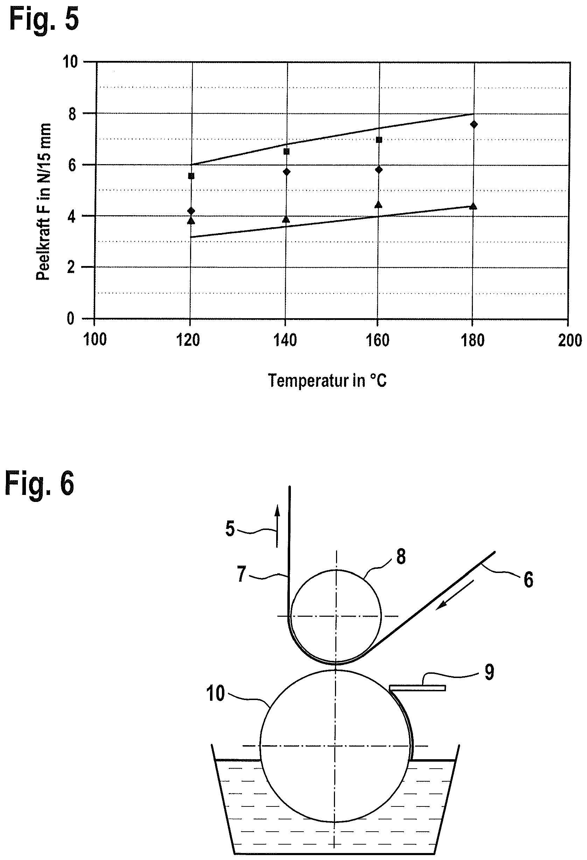

Dieser Zusammenhang ist graphisch zur Veranschaulichung in Figur 5 dargestellt.

**Antiblockmittel in der Schicht (A)**

Zur Verbesserung der Handhabung der Folie, der Verarbeitbarkeit der Folie (Wicklung der Folie auf die/von der Rolle) auf den jeweiligen Maschinen (Bedruckung- und Siegelung), insbesondere aber auch zur Verbesserung des Abziehverhaltens der Folie von der Menüschale ist es von Vorteil, die heißsiegelbare und peelfähige Deckschicht (A) weiter zu modifizieren.

Dies geschieht am besten mit Hilfe von geeigneten Antiblockmitteln, die der Siegelschicht gegebenenfalls zugegeben werden können und zwar in Mengen, so dass ein Verblocken der Folie verhindert wird, sich das Abziehverhalten der Folie von der Menüschale verbessert und insgesamt das Verarbeitungsverhalten der Folie weiter optimiert wird.

Es hat sich als günstig erwiesen, wenn die Deckschicht (A) Partikel in einer bestimmten Größe, in einer bestimmten Konzentration und gegebenenfalls in einer bestimmten Korngrößenverteilung enthält. Es können auch Mischungen von zwei und mehreren verschiedenen Partikelsystemen oder Mischungen von Partikelsystemen in gleicher chemischer Zusammensetzung, aber unterschiedlicher Partikelgröße der Deckschicht (A) zugegeben werden.

Übliche Antiblockmittel (auch als "Pigmente" oder "Partikel" bezeichnet) sind anorganische und/oder organische Partikel, wie beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der in der Deckschicht (A) eingesetzten abgeleiteten Dicarbonsäuren, Ruß, Titandioxid, Kaolin oder vernetzte Polystyrol- oder vernetzte Polymer-Partikel auf Basis von Acrylsäurederivaten.

Die Partikel können der Deckschicht (A) in den jeweils vorteilhaften Konzentrationen, z.B. als Glykolyse Dispersion während der Herstellung des Peel-Polyesters (d.h. während seiner Polykondensation) oder bei der Lackherstellung (nach der Polykondensation) dem lösemittelbasierten Präkursorsystem der Deckschicht (A) zugesetzt werden.

Erfindungsgemäß bevorzugte Partikel sind synthetisch hergestellte, amorphe $SiO_2$-Partikel in kolloidaler Form. Die Partikel werden hervorragend in die Polymermatrix eingebunden und erzeugen nur wenige Vakuolen. Vakuolen können z.B. beim Trocknen des Lackes entstehen; sie bewirken im Allgemeinen eine Erhöhung der Trübung und sind daher für die vorliegende Erfindung wenig geeignet. Zur Herstellung der $SiO_2$-Partikel wird auf den Stand der Technik verwiesen; das Verfahren ist z.B. in der EP 1 475 228 B1 ausführlich offenbart.

Es hat sich als vorteilhaft erwiesen, Teilchen mit einem mittleren Partikeldurchmesser $d_{50}$ von 2,0 bis 8 $\mu$m, bevorzugt von 2,5 bis 7 $\mu$m und besonders bevorzugt von 3,0 bis 6 $\mu$m zu verwenden. Bei der Verwendung von Teilchen mit einem $d_{50}$, der unterhalb 2,0 $\mu$m liegt, ist ein positiver Einfluss der Partikel z.B. auf die Wicklung der Folie auf die/von der Rolle und das Abziehverhalten der Folie von der Menüschale nicht gegeben. Die Folie neigt z.B. beim Abwickeln zum Ein- oder Weiterreißen, was unerwünscht ist. Teilchen mit einem Durchmesser größer als 8 $\mu$m verursachen in der Regel Probleme bei der Verarbeitung und Aufbringung des Lackes (verstopfte Filter).

Bevorzugt ist in der Deckschicht (A) der Durchmesser $d_{50}$ der Partikel größer als die Dicke dieser Schicht. Es hat sich als günstig erwiesen, ein Durchmesser/Schichtdicken-Verhältnis von mindestens 1,2, bevorzugt mindestens 1,3 und besonders bevorzugt mindestens 1,4 zu wählen. In diesen Fällen ist ein besonders positiver Einfluss der Partikel insbesondere auf das Abwickelverhalten der Folie gegeben.

Zur Bereitstellung der gewünschten Peeleigenschaften und der gewünschten guten Wickelung hat es sich als günstig erwiesen, wenn die Deckschicht (A) Partikel in einer Konzentration von 0,1 bis 10 Gew.-% enthält. Bevorzugt beträgt die Konzentration der Partikel 0,5 bis 8,0 Gew.-% und besonders bevorzugt 1,0 bis 6,0 Gew.-%. Enthält die Deckschicht (A) der Folie dagegen Partikel in einer Konzentration von weniger als 0,1 Gew.-%, so ist ein positiver Einfluss auf die Wicklung der Folie nicht mehr gegeben. Enthält dagegen die Deckschicht (A) der Folie Partikel in einer Konzentration von mehr als 10 Gew.-%, so wird die Trübung der Folie zu groß.

Weiterhin hat es sich als vorteilhaft erwiesen, den arithmetischen Mittelwert der absoluten Ordinatenwerte **t** der Deckschicht (A) durch entsprechenden Einsatz der zuvor genannten Partikel so einzustellen, dass ihr $S_a$ Wert größer als 60 nm ist. Bevorzugt ist ein $S_a$ - Wert von größer als 80 nm und besonders bevorzugt von größer als 100 nm.

**Antifogmittel in der Schicht (A)**

Zur Erzielung der gewünschten niedrigen Trübung, bzw. der hohen Clarity der peelfähigen Polyesterfolie, die auch während der Lagerung der fertig gesiegelten Packung, z.B. im Supermarkt bis zum Verbrauch aufrechterhalten werden soll, ist es besonders vorteilhaft, wenn die Deckschicht (A) gute Antifogeigenschaften aufweist. Die Deckschicht (A) enthält dazu geeignete Antifogmittel in der gewünschten Konzentration. Geeignete Antifogmittel sind z.B. Tenside, worunter man Moleküle versteht, die aus einem hydrophoben und einem hydrophilen Teil bestehen, sie sind amphiphil. Die Tenside können dabei nichtionischer, kationischer, anionischer oder zwitterionischer Natur sein. Weiterhin sind polymere Tenside oder Schutzkolloide als Antifogmittel einsetzbar.

Geeignet sind besonders anionische Tenside, die bevorzugt aus der Gruppe der Alkylsulfate, Alkylbenzolsulfate, Alkylethersulfate oder Sulfobernsteinsäureester ausgewählt werden. Ganz besonders bevorzugt sind Tenside, die aus der Gruppe der Sulfobernsteinsäureester (Natriumdioctylsulfosuccinat) ausgewählt sind, z.B. Diethylhexylsulfosuccinat Natriumsalz, Laurylsulfat Natriumsalz.

Das Antifogmittel wird in einer Konzentration von 0,01-5 Gew.-%, bevorzugt von 0,03-4,0 Gew.-% in der Deckschicht (A) verwendet, wobei sich die Höhe der Konzentration des Tensids insbesondere nach den gewünschten Antifogeigenschaften richtet. Gute Antifog-/ Antibeschlageigenschaften der Oberfläche von Deckschicht (A) werden erzielt, wenn eine Bildung feiner Tröpfchen auf der Oberfläche nicht beobachtet wird und gleichzeitig die Abwaschbeständigkeit der Beschichtung gut ist.

Eine Mindestvoraussetzung für gute Antibeschlag-Eigenschaften ist eine hohe Oberflächenspannung, respektive ein niedriger Kontaktwinkel der Oberfläche von Deckschicht (A). Die Antibeschlag-Eigenschaften sind ausreichend gut, wenn die Oberflächenspannung der Deckschicht (A) mindestens 55 mN/m, bevorzugt mindestens 58 mN/m und besonders bevorzugt mindestens 61 mN/m beträgt.

Beim offline-Beschichtungsverfahren wird die Deckschicht (A) in Form einer flüssigen Beschichtungszusammensetzung, d.h. als Lack auf die Basisschicht (B) aufgebracht. Zur Herstellung des Lacks hat es sich als vorteilhaft erwiesen, die "Feststoff-Komponenten" wie das/die Peel-Polymer/e sowie der Gehalt an weiteren Substanzen wie z.B. die Antiblockmittel und/oder Antifogmittel in einem organischen Lösemittel zu lösen. Dabei können die Beschichtungskomponenten jeweils einzeln gelöst bzw. dispergiert und anschließend die jeweiligen Lösungen bzw. Dispersionen mit einander gemischt, oder auf einmal vorgelegt und anschließend im Lösemittel gelöst/dispergiert werden. Bevorzugt wird ein Lösemittelgemisch aus Ethylacetat (EA) und Methylethylketon (MEK) als kontinuierliche Phase bei der Herstellung des Lacks eingesetzt. Dabei beträgt der MEK-Anteil bis zu 50 Gew.-%, bevorzugt bis zu 40 Gew.-%, bezogen auf die Gesamtmasse des Lösemittelgemischs. Besonders bevorzugt wird ausschließlich EA als kontinuierliche Phase vorgelegt.

Bei Verwendung der zuvor genannten Lösemittel wird das Einhalten lebensmittelrechtlicher Kriterien und Grenzwerte besonders erleichtert, wodurch der erfindungsgemäße Einsatz der mit dem Lack beschichteten Folien in Lebensmittelverpackungen ermöglicht wird. Außerdem sinken durch den Einsatz von EA die Lösemittel-basierten Herstellungs- und Entsorgungskosten, wodurch eine besonders wirtschaftliche Herstellung der erfindungsgemäßen Folie ermöglicht wird.

Der "Feststoffgehalt" des Lackes, bzw. der Gehalt an Substanzen im Lack, die nicht das Lösemittel darstellen, beträgt mindestens 20 Gew.-%, bevorzugt mindestens 23 Gew.-% und idealerweise mindestens 25 Gew.-%. Die Höchstgrenzen werden durch die Verfahrensbedingungen festgelegt und finden ihre Obergrenze in der Verarbeitbarkeit des Lackes. Bei einem Feststoffgehalt von unter 20 Gew.-% kann der Lack nicht flächig auf die Folie aufgetragen werden und es bilden sich unbeschichtete Folienabschnitte und Trocknungsphänomene (Coffee-Stain-Effect).

Um eine gute Benetzung der Polyesterfolie mit der Lösung und eine gute Haftung des Peel-Polyesters an der biaxial orientierten Polyesterfolie zu erreichen, ist es von Vorteil, die Oberfläche vor der Beschichtung zunächst Corona vorzubehandeln.

**Basisschicht (B) = biaxial orientierte Polyesterfolie**

Die Folie nach der vorliegenden Erfindung enthält eine Basisschicht (B), welche durch eine transparente biaxial orientierte einschichtige Mono-Polyesterfolie oder eine mehrschichtige koextrudierte Polyesterfolie gebildet werden kann.

Dabei besteht die Basisschicht (B) zu mindestens 80 Gew.-% aus thermoplastischem Polyester. Geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus Ethylenglykol oder 1,3-Propylenglykol und 2,5-Furandicarbonsäure (FDCA), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden (bei der Angabe der Mengen für die Dicarbonsäuren bildet die Gesamtmenge aller Dicarbonsäuren 100 Mol-%. Analog bildet die Gesamtmenge aller Diole auch 100 Mol-%.).

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH geeignet.

Besonders vorteilhaft ist es, wenn die Basisschicht (B) eine biaxial orientierte Polyesterfolie ist, die aus einem Copolyester aufgebaut ist, dessen Dicarbonsäure-Komponenten auf Terephthalsäure abgeleitete Einheiten und eine geringe Menge (< 5 Mol-%) auf Isophthalsäure abgeleitete Einheiten zurückzuführen sind. In diesem Fall ist die Herstellbarkeit der Folie besonders gut. Die Basisschicht (B) enthält dann im Wesentlichen ein Polyestercopolymeres, das überwiegend aus Terephthalsäure und Isophthalsäure -Einheiten und aus Ethylenglykol-Einheiten (> 97 Mol-% an Dioleinheiten) zusammengesetzt ist.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden in Gegenwart allgemein üblicher Polykondensationskatalysatoren, wie Antimontrioxid, Titanoxid oder Ester sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die biaxial orientierte Polyesterfolie ist damit antimonfrei, zumindest aber antimonarm. Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

## Antiblockmittel in der Basisschicht (B)

Um das Verarbeitungsverhalten der Folie weiterhin zu verbessern, ist es von Vorteil, in die Basisschicht (B) ebenfalls Partikel einzuarbeiten. Dabei hat es sich als günstig erwiesen, die folgenden Bedingungen einzuhalten

a) Die Partikel sollten einen mittleren Partikeldurchmesser $d_{50}$ von 1,5 bis 6 $\mu$m aufweisen. Als besonders zweckmäßig hat es sich erwiesen, Teilchen mit einem $d_{50}$ von 2,0 bis 5 $\mu$m und besonders bevorzugt von 2,5 bis 4 $\mu$m zu verwenden.
b) Die Partikel sollten in einer Konzentration von $1 \times 10^{-5}$ bis 5 Gew.-% vorhanden sein. Bevorzugt beträgt die Konzentration der Partikel $1,1 \times 10^{-5}$ bis 4 Gew.-% und besonders bevorzugt $1,2 \times 10^{-5}$ bis 3 Gew.-%.

Die Basisschicht (B) der erfindungsgemäßen peelfähigen Polyesterfolie kann dabei einschichtig oder mehrschichtig (d.h. mindestens zweischichtig) aufgebaut sein. Zur Erzielung der vorgenannten Eigenschaften, insbesondere der geforderten sehr guten optischen Eigenschaften der peelfähigen Polyesterfolie hat sich ein dreischichtiger Aufbau der Basisschicht (B) mit einem Aufbau aus den drei Schichten B', B" und B' oder B', B" und B'" als besonders vorteilhaft erwiesen, wobei B" die Mittelschicht und B' und ggf. B'" jeweils die Außenschicht(en) der Basisschicht darstellen. Jede der einzelnen Schichten B', B" und B'" ist gemäß der obigen Ausführung zur Basisschicht (B) aufgebaut. Die Menge an Partikeln in der coextrudierten Basisschicht B" einer solchen dreischichtigen Folie sollte dabei niedriger eingestellt werden als in den beiden coextrudierten Schichten B' (oder B' und B'"), die vorzugsweise vom Aufbau gleichgehalten werden oder aber auch verschieden sein können (B' und B'").

Bei der dreischichtigen biaxial orientierten Polyesterfolie vom Typ (B'B"B') oder (B'B"B'") soll zweckmäßiger Weise in der Schicht (B") die Menge der Partikel zwischen 0 und 2,0 Gew.-% liegen, vorzugsweise zwischen 0 und 1,5 Gew.-%, insbesondere zwischen 0 und 1,0 Gew.-%. Als besonders zweckmäßig hat es sich erwiesen, in die Basisschicht nur Partikel einzuarbeiten, wie sie über das arteigene Rezyklat in die Folie gelangen. Die optischen Eigenschaften der Folie, insbesondere die Trübung der Folie, sind dann besonders gut.

Die Dicke der beiden Schichten B' (oder B' und B'") kann gleich oder verschieden sein; ihre Dicke liegt im Allgemeinen jeweils zwischen 0,5 und 5 $\mu$m.

Für die Verarbeitung der Polymere, insbesondere aber für die Erzielung der gewünschten guten optischen Eigenschaften der peelfähigen Polyesterfolie hat es sich als günstig erwiesen, die Polymere für die Basisschicht (B") und die der anderen Schichten (B' und/oder B'") der biaxial orientierten Polyesterfolie so zu wählen, dass sich die Viskositäten der jeweiligen Polymerschmelzen nicht zu sehr unterscheiden. Ist dies nicht der Fall, ist mit zusätzlichen Erhebungen/Vorsprüngen, mit Fließstörungen oder mit Streifenbildung auf der fertigen Folie zu rechnen. Für die Beschreibung der Viskositätsbereiche der Schmelzen wird wiederum der SV-Wert verwendet.

Für handelsübliche Polyethylenterephthalate, die sich zur Herstellung von biaxial orientierten Polyesterfolien eignen, liegen die SV-Werte im Bereich von 600 bis 1000. Um eine einwandfreie Qualität der Folie im Sinne der vorliegenden Erfindung zu gewährleisten, sollte der SV-Wert der Polymeren für die Schichten B' (oder B' und B'") im Bereich von 500 bis 1200, bevorzugt im Bereich von 550 bis 1150, insbesondere bevorzugt im Bereich von 600 bis 1000 liegen. Es gilt, dass sich die SV-Werte der Polymerschmelzen für die coextrudierte Basis- und die anderen coextrudierten Schichten um nicht mehr als 200, vorzugsweise nicht mehr als 150, insbesondere aber nicht mehr als 100 Einheiten unterscheiden sollten. In allen genannten Fällen ist es weiterhin für die vorliegende Erfindung günstig, wenn die Viskositäten der beiden Schichten (B' und/oder B'") kleiner sind als die Viskosität der Schicht (B").

Die biaxial orientierte Polyesterfolie (B) kann zusätzlich übliche Additive, wie Stabilisatoren (UV, Hydrolyse), flammhemmende Stoffe oder Füller, enthalten. Sie werden zweckmäßig dem Polymer bzw. der Polymermischung bereits vor dem Aufschmelzen im Extruder zugesetzt.

## Beschichtung (C)

Erfindungsgemäß wird zur Bildung der Schicht (C) eine der beiden Oberflächen der Basisschicht (B) inline oder offline mit einem geeigneten Verfahren beschichtet. Bevorzugt ist die inline Beschichtung vor der Querstreckung. Erfindungsgemäß werden für diese Beschichtung Acrylcopolymere eingesetzt. Die bevorzugt verwendeten Acrylcopolymeren bestehen im Wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Vernetzungsmittels, zur Ausbildung von intermolekularen Vernetzungen befähigt ist.

Die acrylische Komponente der Beschichtungscopolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C- Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Verarbeitbarkeit der peelfähigen Polyesterfolie, insbesondere eine gute Wickelbarkeit. Ganz besonders bevorzugt werden Copolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von 70 bis 95 Gew.-%, eingesetzt. Das Acrylatcomonomer solcher Acryl-/Methacryl-Kombinationen ist vorzugsweise in einem Anteil von 15 bis 65 Mol-% anwesend und das Methacrylat- Comonomer vorzugsweise in einem Anteil, der im Allgemeinen um 5 bis 20 Mol-% grösser ist als der Anteil des Acrylatcomonomers. Das Methacrylat ist vorzugsweise in einem Anteil von 35 bis 85 Mol-% in der Kombination enthalten.

Zur Erhöhung der Lösungsmittelbeständigkeit können gegebenenfalls zur Ausbildung von Vernetzungen geeignete Comonomere eingesetzt werden, wie z. B. N- Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den oben genannten vernetzenden Comonomeren werden N-Methylolacrylamid und N- Methylolmethacrylamid bevorzugt, und zwar in erster Linie deswegen, weil Copolymerenketten, die eines dieser Monomerer enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z. B. eines Melamin- oder Harnstoff-Formaldehyd-Kondensationsproduktes erzielt werden. Wird keine Lösungsmittelbeständigkeit benötigt, so kann auf Vernetzungsmittel verzichtet werden.

Die oben beschriebene Beschichtung (C) gemäß der vorliegenden Erfindung ist ausführlich in der EPA 0 144 948 beschrieben, auf die an dieser Stelle ausdrücklich Bezug genommen wird.

Die bevorzugte Acrylat-Beschichtung wird einseitig auf die Basisschicht (B) aufgebracht und dient im Wesentlichen zur Verbesserung der Wickelung, insbesondere Verbesserung der Abwickelung der Folie nach Lagerung (bei erhöhten Temperaturen). Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

## Verfahren

Gegenstand der vorliegenden Erfindung ist weiterhin ein Verfahren zur Herstellung der siegelbaren und peelfähigen Polyesterfolie. Es umfasst die Herstellung einer Basisschicht (B) durch Coextrusion, das biaxiale Strecken der Basisschicht (B), Thermofixieren und Aufwickeln der gestreckten Basisschicht (B).

Weiterhin umfasst das Verfahren die offline Beschichtung der Basisschicht (B) auf der unbeschichteten Seite mit der Deckschicht (A).

Weiterhin umfasst das Verfahren die Beschichtung der Basisschicht (B) mit der acrylisch vernetzenden Schicht (C) entweder zwischen dem ersten und dem zweiten Streckschritt oder offline nach der Herstellung der biaxial orientierten PET-Folie.

Bevorzugt umfasst das Verfahren die Herstellung einer mehrschichtige Basisschicht (B), die die Schichten B" und B' oder B" und B''' umfasst. Besonders bevorzugt umfasst das Verfahren die Herstellung einer mehrschichtigen Basisschicht (B), die die Schichten B', B" und B' oder die Schichten B', B" und B''' umfasst. Die Schicht B" stellt die Mittelschicht dar und die Schichten B' und ggf. B''' stellt/stellen jeweils die Außenschicht(en) der Basisschicht dar. Die Herstellung dieser Schichten erfolgt mittels Coextrusion.

Die vorliegende Erfindung betrifft somit ein Verfahren zur Herstellung einer erfindungsgemäßen peelfähigen Polyesterfolie, dadurch gekennzeichnet, dass ein Polymer für die Basisschicht (B), die eine erste und eine zweite Oberfläche aufweist, oder mehrere Polymere für die einzelnen Schichten B', B" und B''' oder B', B" und B' der Basisschicht (B) in einem oder mehreren Extrudern aufgeschmolzen wird/werden, in einer Ein- oder Mehrschichtdüse zu einem flachen Schmelzfilm ausgeformt wird/werden, der anschließend mit Hilfe einer Kühlwalze abgezogen, biaxial gestreckt, thermofixiert und aufgerollt wird, wobei die biaxiale Streckung eine Längsstreckung und eine Querstreckung umfasst, und wobei an die erste Oberfläche der Basisschicht (B) offline mittels üblicher Beschichtungstechnologie eine Peel-Beschichtungszusammensetzung zur Bildung der Deckschicht (A) nass angetragen und getrocknet wird und die so erhaltene Folie dann wieder aufgewickelt wird, wobei zur Bildung der Schicht (C)

(a) zwischen der Längsstreckung und der Querstreckung eine Beschichtungszusammensetzung zur Bildung der Schicht (C) inline nass an die zweite Oberfläche der Basisschicht (B) angetragen wird, oder
(b) vor oder nach der offline Beschichtung mit der Deckschicht (A) eine Beschichtungszusammensetzung zur Bildung der Schicht (C) offline mittels üblicher Beschichtungstechnologie an die zweiter Oberfläche der Basisschicht nass angetragen wird

**Biaxial orientierte Polyesterfolie = Basisschicht (B)**

Die transparente, biaxial orientierten Polyesterfolie (= Basisschicht (B) oder (B'B"B') oder (B'B"B''')) wird nach dem üblichen Coextrusions-Verfahren hergestellt. Bevorzugt ist die Herstellung einer Polyesterfolie mit dem Schichtaufbau (B'B"B' oder B'B"B'''), mit der besonders gut eine Folie mit guten optischen Eigenschaften hergestellt werden kann. Bei diesem bevorzugten dreischichtigen Folienaufbau mit einer Schicht (B") und den beiden Schichten (B') bzw. den Schichten (B' und B''') ist in der Schicht (B") die Partikelkonzentration vorzugsweise niedriger als die in den beiden Schichten (B'), bzw. in den Schichten (B' und B'''). Die Partikelkonzentration in der Schicht (B") sollte so gewählt werden, dass sie sich positiv auf die Trübung und den Glanz der Folie auswirkt. Bei einer dreischichtigen Folie vom genannten Typ wird in der Schicht (B") die Partikelkonzentration zwischen 0 und 0,06 Gew.-%, vorzugsweise zwischen 0 und 0,03 Gew.-% und insbesondere zwischen 0 und 0,01 Gew.-% liegen. Der Partikeldurchmesser der eingesetzten Teilchen ist prinzipiell nicht eingeschränkt, jedoch sind Teilchen mit einem $d_{50}$ von größer 1 $\mu$m besonders bevorzugt. Die Konzentration der Partikel in den Schichten B' oder den Schichten B' und B''' liegt zwischen 0,01 und 0,2 Gew.-%, bevorzugt zwischen 0,02 und 0,16 Gew.-% und besonders bevorzugt zwischen 0,030 und 0,12 Gew.-% und richtet sich im Wesentlichen nach der Größe der eingesetzten Partikeln.

Bei dem Coextrusions-Verfahren werden z.B. nach der Extrusion der jeweiligen Schmelzen in getrennten Extrudern diese in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt. Aus verfahrenstechnischer Sicht (Durchmischung der verschiedenen Komponenten) hat es sich dabei als besonders günstig erwiesen, wenn die Extrusion der Polymere zumindest für die Schichten (B'), bzw. für die Schichten (B' und B''') mit einem Zweischneckenextruder mit Entgasungsmöglichkeit(en) durchgeführt wird. Es wird hierdurch eine Folie hergestellt, die optisch einwandfrei ist, z.B. keine Wolkenstruktur oder keine Streifen aufweist. Eine solche Folie lässt sich besonders gut weiterverarbeiten, insbesondere sehr gut bedrucken.

Die biaxiale Streckung der Folie wird im Allgemeinen sequentiell durchgeführt. Bei der sequenziellen Streckung wird vorzugsweise erst in Längsrichtung und anschließend in Querrichtung gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 60 bis 130 °C (Aufheiztemperaturen 60 bis 130 °C), und in Querrichtung in einem Temperaturbereich von 90 °C (Beginn der Streckung) bis 140 °C (Ende der Streckung) durchgeführt. Das Längsstreckverhältnis liegt im Bereich von 2,0:1 bis 5,5:1, bevorzugt von 2,3:1 bis 5,0:1. Das Querstreckverhältnis liegt allgemein im Bereich von 2,4:1 bis 5,0:1, bevorzugt von 2,6:1 bis 4,5:1.

**Aufgebringen der Schicht (C)**

Die Beschichtung der Folie (B) mit der acrylisch vernetzenden Schicht (C) erfolgt entweder inline vorzugsweise zwischen dem ersten und dem zweiten Streckschritt oder offline nach der Herstellung der biaxial orientierten PET-Folie, vor oder nach der Beschichtung mit der Beschichtungszusammensetzung zur Bildung der Schicht (A).

Bei der vorzugsweise angewendeten inline Beschichtung wird eine der beiden Oberflächen der Basisschicht (B) vor der Querstreckung mit einer Schicht (C) beschichtet. Bei der offline Beschichtung erfolgt die Aufbringung der Schicht (C) vorzugsweise nach der Herstellung der Deckschicht (A).

Die Schicht (C) dient zur Verbesserung des Verarbeitungsverhaltens, insbesondere zur Verbesserung des Wickelverhaltens, ganz insbesondere zur Verbesserung des Abwickelverhaltens der peelfähigen Polyesterfolie.

Erfindungsgemäß wird die Polyesterfolie mit einer funktionalen Beschichtung derart beschichtet, dass die Beschichtung auf der fertigen Polyesterfolie eine Dicke von bevorzugt 5 bis 200 nm, besonders bevorzugt 20 bis 150, ganz besonders bevorzugt 30 bis 80 nm aufweist. Besonders bevorzugt ist die Aufbringung der Schicht (C) mittels des "Reverse gravure-roll coating" Verfahrens, bei dem sich die Beschichtungen äußerst homogen in Schichtdicken bis zu 200 nm auftragen lassen. Ebenfalls bevorzugt ist die Auftragung durch das Meyer-Rod-Verfahren, mit dem sich größere Beschichtungsstärken erzielen lassen. Die Beschichtung wird bevorzugt als Lösung, Suspension oder als Dispersion aufgetragen, besonders bevorzugt als wässrige Lösung, Suspension oder Dispersion.

Die genannten Stoffe werden als verdünnte, wässrige Lösung oder Dispersion auf eine der beiden Folienoberflächen aufgebracht, und anschließend wird das Lösungsmittel verflüchtigt. Wird die Beschichtung Inline vor der Querstreckung aufgebracht, reicht die Temperaturbehandlung in der Querstreckung und der anschließenden Hitzefixierung aus, um das Lösungsmittel zu verflüchtigen und die Beschichtung zu trocknen.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

## Herstellung der Deckschicht (A)

Weiterhin umfasst die Herstellung der erfindungsgemäßen heißsiegelbaren und peelfähigen Polyesterfolie einen weiteren, unabhängigen Verfahrensschritt, in dem offline die Beschichtungszusammensetzung zur Bildung der Schicht (A) angetragen wird. Hierbei wird mittels üblicher Beschichtungstechnologie die Peel-Beschichtungszusammensetzung an die Basisfolie (B) auf der der Schicht (C) abgewandten Oberfläche in der gewünschten Stärke nass (aus Lösung/Dispersion) angetragen.

Übliche Beschichtungstechnologien sind u.a. die reverse-Roll oder die reverse-Gravur Beschichtung, die forward-Gravur-Beschichtung (forward gravure), die Beschichtung mittels Meyer-Bar, die Gießwalzen-Beschichtung, die Beschichtung mittels Fließer, die Vorhangbeschichtung, die Sprühbeschichtung oder die Beschichtung mit einem Rakel (Messergießer).

Eine typische Beschichtungsanlage - auch mit Lackieranlage bezeichnet - besteht im Wesentlichen aus einer Abrollung, einer Corona-Vorbehandlungs-Station, einer oder mehreren Antragsstationen, einem Trockner und einer Aufrollung.

Die Beschichtung zur Bildung der Deckschicht (A) wird bevorzugt über eine Gravur- oder die Beschichtungswalze an die Polyesterfolie angetragen, die im Gleichlauf zur Bahn betrieben wird (forward gravure). Die Arbeitsbreite beträgt vorzugsweise mehr als 1000 mm und die Maschinengeschwindigkeit beträgt vorzugsweise mehr als 150m/min.

Figur 6 zeigt schematisch den Aufbau und die Arbeitsweise einer solchen Antragsstation. Die Gravurwalze (= Antragswalze) (10) hat z.B. einen Durchmesser von 200 bis 600 mm mit einem Stahlkern, auf dem eine dünne metallische Schicht aufgebracht ist, in die mechanisch oder mittels Laser Näpfchen eingeprägt werden. Die Näpfchen können - je nach Aufgabenstellung - unterschiedliches Aussehen haben. Typische Näpfchengeometrien sind rund, quadratisch, haben eine Wabenstruktur, sind in sich geschlossen oder durchgängig. Das Näpfchenvolumen wird weiterhin durch die Tiefe und Größe der einzelnen Näpfchen bestimmt, welches wiederum maßgeblich Einfluss auf den Nassantrag und die Beschichtungsoptik hat. Nach Einprägung der Näpfchen wird die Gravurwalze (10) üblicherweise abschließend verchromt. Die in der Figur dargestellte Technologie wird mit "Forward Gravure" bezeichnet. Daneben kann natürlich auch die "Reverse Gravure" angewendet werden, sie wird im vorliegenden Fall aber nicht bevorzugt verwendet.

Der Antrag der Peel-Beschichtungszusammensetzung (entspricht der nassen Deckschicht (A)) an die biaxial orientierte Polyesterfolie (B) (6) erfolgt über einen Trog an die Antragswalze (10). Mit einem Rakel (9) wird üblicherweise überschüssiges Material von der Antragswalze (10) abgestreift. Von der Antragswalze wird die Peel-Beschichtungszusammensetzung an die Polyesterfolie (6), die über einen Presseur (8) geführt wird, angetragen. Anschließend wird die beschichtete Folie (7) in eine Trocknungsvorrichtung (5) weitergeführt.

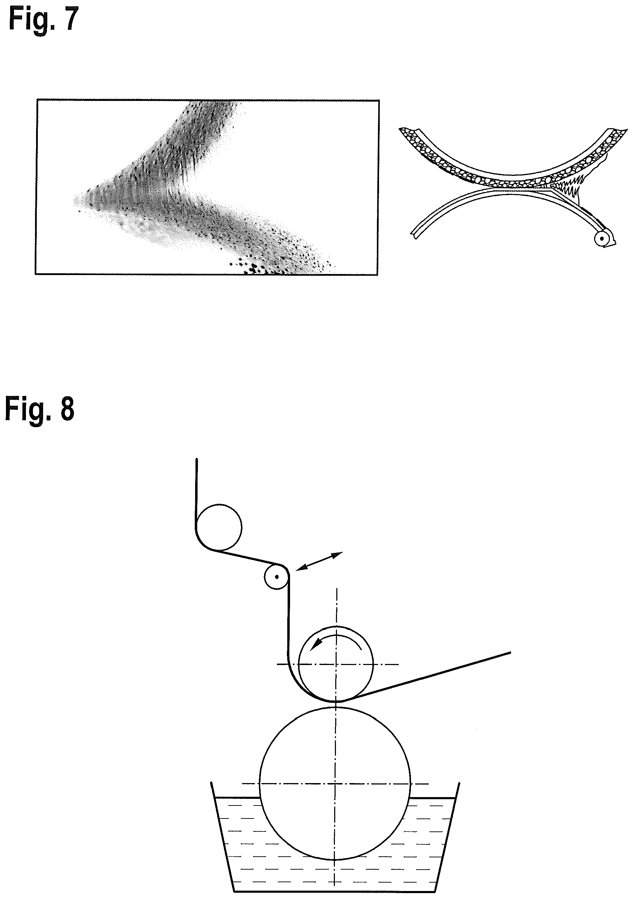

Das Verfahren ähnelt damit stark der üblichen Drucktechnologie, wie sie z.B. von M. Lake, in "Oberflächentechnik in der Kunststoffverarbeitung", Hanser 2009, detailliert dargestellt wird. Im Vergleich zur Drucktechnik wird im vorliegenden Fall die Peel-Beschichtung (in der Praxis auch mit Lack bezeichnet) vollflächig und nicht wie beim Drucken, partiell aufgebracht. Zum Übertragungsmechanismus der Peel-Beschichtung von der Gravurwalze auf das Substrat (= biaxial orientierte Polyesterfolie) wird an dieser Stelle auf die Vorlesung von E. Dörsam (Technische Universität Darmstadt, Sommersemester 2012), "Printing Technology for Electronics, 4. Ink Transfer in the Printing Process", 01.06.2012, verwiesen. Die Übertragung der Peel-Beschichtung auf die Polyesterfolie erfolgt dabei im Wesentlichen durch Farbspaltung, wie sie anschaulich in Figur 7, E. Dörsam, 2012, dargestellt ist.

Um eine peelfähige Polyesterfolie zu erhalten, die sich direkt nach der Beschichtung durch ein gutes Handling und ein gutes Wickelverhalten auszeichnet, wird die Folie bevorzugt direkt nach der Beschichtung - vor der Trocknung - auf der Beschichtungsseite = Schicht (A) nach einem bestimmten Verfahren geglättet.

Zur Glättung der Folienoberfläche können eine Reihe von verschiedenen Techniken angewendet werden, z.B. die Glättung mittels Luftmesser, der Einsatz von Glättwalzen, über die die nasse Schicht geführt wird oder die Glättung mit Hilfe sogenannter "smoothing bars".

Zur Herstellung der erfindungsgemäßen peelfähigen Polyesterfolie wird das Verfahren mittels "smoothing bar" angewendet, siehe Figur 8. Der "smoothing bar" besteht aus einer sich drehenden Walze mit einem Durchmesser von 2 bis 10 cm und glatter Oberfläche, die im Gleichlauf oder im Gegenlauf betrieben werden kann.

Es hat sich dabei im Sinne einer guten Wicklung weiterhin als vorteilhaft erwiesen, den "smoothing bar" im Gegenlauf (reverse) zu betreiben, wobei die Geschwindigkeit des "smoothing bar" etwa 20 bis 200 % der Folienbahngeschwindigkeit beträgt. Der Umschlingungswinkel der Folie kann dabei in gewissen Grenzen variieren und richtet sich u.a. nach der Viskosität der Peel-Beschichtungszusammensetzung. Üblich sind Umschlingungswinkel im Bereich von 0 bis 90 °, bevorzugt 0 bis 45 ° und besonders bevorzugt 0 bis 20°.

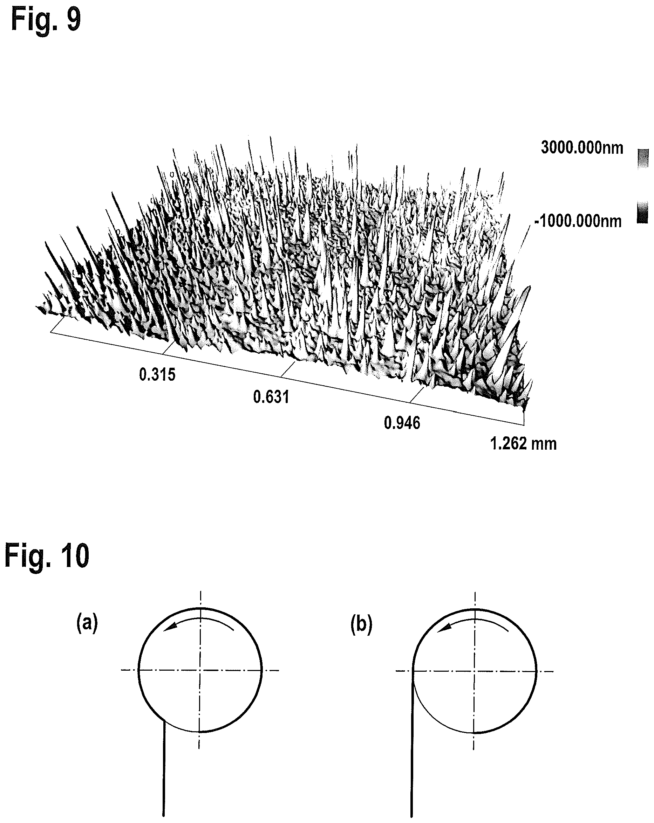

Durch die Glättung der Beschichtungsseite der peelfähigen Polyesterfolie wird eine Folie erhalten, die sich durch ein verbessertes Wickelverhalten gegenüber Folien ohne Glättung auszeichnet. Eine solche geglättete Folie zeichnet sich durch eine Topographie aus, wie sie beispielshaft in Figur 9 dargestellt ist.

Die mit dem "smoothing bar" geglätteten Folien zeichnen sich durch einen arithmetischen Mittelwert der absoluten Ordinatenwerte $S_a$ der Deckschicht (A) aus, der kleiner ist als 300 nm, bevorzugt kleiner ist als 250 nm und besonderes bevorzugt kleiner ist als 200 nm und durch eine reduzierte Spitzenhöhe $S_{pk}$, die kleiner ist als 700 nm, bevorzugt kleiner ist als 690 nm und besonderes bevorzugt kleiner ist als 680 nm.

Für die Herstellung der erfindungsgemäßen peelfähigen Polyesterfolie ist es weiterhin von Vorteil, wenn bei der Beschichtung die folgenden Kriterien eingehalten werden

- Die Temperatur der Peel-Beschichtungszusammensetzung (= Lack) befindet sich innerhalb bestimmter Grenzen. Die Temperatur des Lackes (gemessen in der Wanne und im Zulaufbehälter) beträgt 10 bis 40 °C, vorzugsweise 16 bis 28 °C und besonders bevorzugt 18 bis 25 °C. Beträgt die Temperatur des Lackes weniger als 10 °C treten in der beschichteten Folie Wolkenstrukturen auf, die unerwünscht sind. Bei einer Temperatur des Lackes von größer als 40 °C ist die beschichtete Folie fleckig, was ebenfalls unerwünscht ist.

- Die Viskosität des Lackes liegt in einem bestimmten Bereich. Die Viskosität wird mittels DIN 4-Auslaufbecher bestimmt. Die Viskosität des Lackes (gemessen in der Wanne und im Zulaufbehälter) beträgt vorzugsweise 10 bis 50 s, vorzugsweise 16 bis 32 s und besonders bevorzugt 17 bis 30 s. Beträgt die Viskosität des Lackes weniger als 10 s, so ist der Antrag ungleichmäßig, was sich in hohen Trübungsschwankungen der Folie bemerkbar macht. Die Schwankungen sind unerwünscht. Bei einer Viskosität des Lackes von größer als 50 s ist die beschichtete Folie in der Trübung deutlich erhöht, was ebenfalls unerwünscht ist.

Bei der Beschichtung und bei der Weiterverarbeitung der erfindungsgemäßen peelfähigen Polyesterfolie mit dem Schichtaufbau (A= peelfähige Deckschicht, B = biaxial orientierte PET-Folie, C = acrylisch vernetzte Beschichtung) wurde Folgendes festgestellt

- Bei der Aufrollung der beschichteten Folie zur Masterrolle und nachfolgendem Probeabziehen der peelfähigen Polyesterfolie von der Rolle wird kein Abrollgeräusch festgestellt. Die Folie fällt beim Abwickeln tangential von der Rolle, wie in Figur 10 (b), rechts, dargestellt.

- Bei der Weiterverarbeitung der beschichteten Folie, z.B. beim Schneiden der Masterrolle in kleine Schnittrollen, wurde keine Haftung der Folien lasen untereinander beobachtet, die Folie fällt weiterhin beim Abwickeln tangential von der Rolle und es wurde kein Abrollgeräusch festgestellt.

- Das Wickelverhalten der fertigen peelfähigen Polyesterfolie ist sehr gut und entspricht den Erfordernissen.

- Die Trockenmasse der Beschichtung auf der beschichteten Folie bleibt vollständig auf der beschichteten Seite. Es erfolgt insbesondere kein Ausreißen der Trockenmasse ("kohäsiver Bruch") durch Übertragung auf die Rückseite innerhalb eines Wickels.

Wird andererseits eine peelfähige Polyesterfolie mit der Beschichtung (A), aber ohne die acrylisch vernetzte Beschichtung (C) hergestellt, so stellt man die folgenden Punkte fest

- Bei der Aufrollung der beschichteten Folie zur Masterrolle und nachfolgendem Probeabziehen der peelfähigen Polyesterfolie von der Rolle kommt es zu Abrollgeräuschen. Die Folie fällt nicht tangential von der Rolle, wie in Figur 10 (b), rechts dargestellt, sondern es wird ein Versatz beobachtet, wie in Figur 10 (a), linkes Bild, dargestellt.

- Bei der Weiterverarbeitung der beschichteten Folie, z.B. beim Schneiden der Masterrolle in kleine Schnittrollen nach Transport und Lagerung, wird eine verstärkte Haftung der Folienlagen untereinander beobachtet. Der Versatz wird deutlich größer und die Folie kann - wenn überhaupt - nur mit Kraftanstrengung von der Rolle gezogen werden.

- Durch die vergrößerte Haftung zwischen den einzelnen Folienlagen kommt es zu Folienabrissen in der Maschine, was zum Abbruch der Schneidoperation führ. Dies ist unerwünscht.

- Das Anhaften an die Rückseite kann so stark sein, dass Teile der Lackschicht ausgerissen und übertragen werden.

Fazit ist, dass das Wickelverhalten der peelfähigen Polyesterfolie ungenügend ist und nicht den Erfordernissen entspricht.

## Erfindungsgemäße Eigenschaften

Die erfindungsgemäße peelfähige Polyesterfolie, hergestellt nach dem erfindungsgemäßen Verfahren, besitzt eine Reihe von Eigenschaften, von denen untenstehend die wichtigsten aufgeführt sind.

Der Glanz der Oberfläche der Schicht (C) ist größer als 100, in der bevorzugten Ausführungsform größer als 110 und in der besonders bevorzugten Ausführungsform größer als 120. Die nicht beschichtete Folienoberfläche eignet sich daher auch für eine weitere funktionelle Beschichtung, für die Bedruckung oder für die Metallisierung. Der Glanz Oberfläche der Schicht (A), die durch eine offline Beschichtung auf die Basisschicht (B) aufgetragen wurde, ist größer als 70, bevorzugt größer als 75 und besonders bevorzugt größer als 80.

Die Clarity der erfindungsgemäßen peelfähigen Polyesterfolie ist größer als 80 %. Bevorzugt beträgt die Clarity der erfindungsgemäßen peelfähigen Polyesterfolie mehr als 82 % und besonders bevorzugt mehr als 84 %. Die Trübung der erfindungsgemäßen Folie ist kleiner als 20 %. Bevorzugt beträgt die Trübung der erfindungsgemäßen Polyesterfolie weniger als 18 % und besonders bevorzugt weniger als 15 %. Die Transparenz der erfindungsgemäßen peelfähigen Polyesterfolie ist größer als 90. Bevorzugt beträgt die Transparenz der erfindungsgemäßen peelfähigen Polyesterfolie mehr als 90,5 und besonders bevorzugt mehr als 91.

Die Peeleigenschaften der erfindungsgemäßen peelfähigen Polyesterfolie sind hervorragend. Die erfindungsgemäße peelfähige Polyesterfolie zeigt gegenüber APET- und RPET - Menüschalen eine feste Peelbarkeit (medium peel). Die Peelkraft liegt im Temperaturbereich von 110 bis 160 °C im gewünschten Bereich von 3 bis 7 N/15mm. Darüber hinaus hat sich überraschender Weise gezeigt, dass die erfindungsgemäße Folie auch sehr gut gegen CPET- und ACPET- Menüschalen und Menüschalen aus Karton, die mit einer APET-Schicht überzogen sind, peelt; die Folie zeigt auch hier in allen Fällen die gewünschte feste Peelbarkeit.

Darüber hinaus besitzt die Folie ein einwandfreies "Cold-Peel-Verhalten. Sie ist darüber hinaus "Reworkable", was wirtschaftlich von hohem Vorteil ist. Darüber hinaus zeigt die Siegelnaht eine hohe Integrität, d.h., sie ist z.B. Wasser- und Olivenölresistent und besteht den sogenannten Wasser- und Olivenöltest.

Die peelfähigen Polyesterfolie zeichnet sich durch ein sehr gutes Wickelverhalten - auch nach Lagerung bei erhöhten Temperaturen - aus. Zur Kennzeichnung des erfindungsgemäßen Wickelverhaltens - bei erhöhter Temperatur der gewickelten Rolle - wird der weiter unten beschriebene Adhesionstest (= Labortest) an den erfindungsgemäßen Folien durchgeführt. Die Folie hat den Adhesionstest bestanden, wenn die Kraft zum Trennen der beiden Muster unterhalb von 0,1 N/50 mm liegt.

Die Adhäsion zwischen der biaxial orientierten Polyesterfolie und der offline aufgebachten Deckschicht (A) (Intra-layer bond strength) ist so groß, dass beim Abziehen der Folie von der Menüschale der Bruch bevorzugt zwischen der Peel-Schicht und der Menüschalenoberfläche stattfindet (Adhäsionsbruch). Dies verbessert insbesondere die "Reworkability" und das Aussehen der verbleibenden Menüschale.

Die erfindungsgemäße peelfähige Polyesterfolie eignet sich hervorragend zum Verpacken von Nahrungs- und Genussmitteln, insbesondere bei der Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst u.a. die wichtigsten erfindungsgemäßen Folieneigenschaften zusammen.

**Tabelle 1**

| Deckschicht (A) | Erfindungsgemäßer, zweckmäßiger Bereich | Bevorzugt | Besonders bevorzugt | Einheit | Messmethode |
|---|---|---|---|---|---|
| Anteil Polyester | 85 bis 99 | 86 bis 99 | 87 bis 99 | Gew.-% | |
| Anteil Einheiten im Polyester, aufgebaut auf aromatischen Dicarbonsäuren | 25 bis 95 | 40 bis 90 | 50 bis 88 | Mol.-% | |
| Anteil Einheiten im Polyester, aufgebaut auf aliphatischen Dicarbonsäuren | 5 bis 75 | 10 bis 60 | 12 bis 50 | Mol.-% | |
| Anteil weitere Substanzen | 1 bis 15 | 1 bis 14 | 1 bis 13 | Gew.-% | |
| Glasübergangstemperatur Polyester | 0 bis 30 | 0 bis 27 | 2 bis 25 | °C | intern |
| SV-Wert Polyester | 200-2000 | 250-1900 | 300-1900 | | intern |
| Masse der trockenen Deckschicht (A) | 1-8 | 1,2-8 | 1,4-8 | g/m$^2$ | intern |
| Partikeldurchmesser $d_{50}$ | 2,0 bis 8 | 2,5 bis 7 | 3,0 bis 6 | μm | intern |
| Füllstoffkonzentration | 0,5 bis 10 | 0,7 bis 8,0 | 1,0 bis 6,0 | % | intern |
| **Eigenschaften** | | | | | |
| Dicke der Folie | 3 bis 200 | 4 bis 150 | 5 bis 100 | μm | |
| Mindestsiegeltemperatur von DS (A) gegen APET- und RPET-Menüschalen | 115 | 112 | 110 | °C | intern |
| Siegelnahtfestigkeit von DS (A) gegen APET-und RPET-Menüschalen | 3 bis 7 | 3,1 bis 7 | 3,2 bis 7 | N/15 mm | intern |
| Cold peel-Verhalten | medium peel | medium peel | medium/ strong peel | | intern |
| Arithmetischer Mittelwert der absoluten Ordinatenwerte $S_a$ | <300 | < 250 | < 200 | nm | DIN EN ISO 25178-2 |
| Reduzierte Spitzenhöhe $S_{pk}$ | < 700 | < 690 | < 680 | nm | DIN EN ISO 25178-2 |
| Adhesionstest | <0,1 | < 0,09 | <0,08 | N/50 mm | intern |
| Glanz der Oberfläche (C) | > 80 | > 90 | > 100 | | DIN 67530 |
| Glanz der offline beschichteten Oberfläche (A) | >70 | >75 | > 80 | | DIN 67530 |
| Clarity der Folie | > 80 | > 82 | > 84 | % | ASTM D 1003 |
| Trübung der Folie | < 20 | < 18 | < 15 | % | ASTM D 1003-61,Methode A |
| Transparenz der Folie | > 90 | > 90,5 | >91 | % | |

(fortgesetzt)

| Eigenschaften | | | | | |
|---|---|---|---|---|---|
| Schrumpf der Folie | < 2,5 | < 2,2 | <2,0 | % | DIN 40634, 150 °C, 15 min. |
| E-Modul der Folie | > 3000 | > 3500 | > 4000 | | ISO527-1 und ISO 527-3; Mustertyp 2 |

**Definitionen**

Unter heißsiegelbar wird die Eigenschaft einer mehrschichtigen, mindestens eine Basisschicht (B) enthaltenden Polyester-Folie verstanden, die zumindest eine heißsiegelbare Deckschicht (A) enthält, die mittels Siegelbacken durch Anwendung von Wärme (110 bis 200 °C) und Druck (1 bis 6 bar) in einer bestimmten Zeit (0,1 bis 2 sec) mit einem Substrat aus thermoplastischem Kunststoff, insbesondere APET/RPET-und CPET-Menüschalen verbunden werden kann, ohne dass dabei die Trägerschicht (= Basisschicht (B)) selbst plastisch wird. Um dies zu erreichen, besitzt das Polymer der Schicht (A) im Allgemeinen einen deutlich niedrigeren Schmelzpunkt als das Polymer der Basisschicht. Wird als Polymer für die Basisschicht beispielsweise Polyethylenterephthalat mit einem Schmelzpunkt von 254 °C verwendet, so beträgt der Schmelzpunkt der heißsiegelbaren Schicht (A) im Allgemeinen deutlich weniger als 230 °C, im vorliegenden Fall bevorzugt weniger als 200 °C und besonders bevorzugt weniger als 170 °C.

Unter peelfähig wird die Eigenschaft einer Polyester-Folie verstanden, die zumindest eine heißsiegelbare und peelfähige Deckschicht (A) enthält, die nach der Heißsiegelung auf APET/RPET-und CPET-Menüschalen derart wieder von der Menüschale abgezogen werden kann, dass dabei die Folie weder ein- noch abreißt. Der Verbund aus heißsiegelfähiger Folie und Menüschale geht beim Abziehen der Folie von der Menüschale i.d.R. in der Naht zwischen der Heißsiegelschicht und der Menüschalenoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen der Menüschale heißgesiegelten Folie in einem Zug-Dehnungs-Prüfgerät unter einem Schälwinkel von 180 ° entsprechend Figur 1 wird ein Reiß-Dehnverhalten der Folie gemäß Figur 2 erhalten. Bei Beginn des Abschälens der Folie von dem Substrat steigt die dazu erforderliche Kraft gemäß Figur 2 bis zu einem bestimmten Wert (z.B. 5 N/15mm) an und bleibt dann über den gesamtem Schälweg in etwa konstant, ist allerdings mit mehr oder weniger großen Schwankungen behaftet (ca. +/- 20%).

Unter Cold-Peel wird die Eigenschaft einer peelfähigen Polyesterfolie verstanden, dass sie nach Lagerung im Kühlschrank bei üblichen Temperaturen (2 bis 8 °C) ihre zuvor definierte Peelfähigkeit nicht verliert. Üblicher Weise wird das Cold-Peel-Verhalten wie folgt getestet: Die heißgesiegelte Packung wird in den Kühlschrank gestellt und dort ca. 15 min aufbewahrt. Die Packung wir aus dem Kühlschrank herausgeholt und unmittelbar danach wird die Folie von der Menüschale mit der Hand abgezogen. Sie muss hierbei komplett peelen, d.h. sie darf bei diesem Vorgang weder reißen, noch einreißen, noch weitereißen. Die Höhe der Peelkraft sollte dabei "Medium peel" entsprechen.

Unter "Reworkability" wird die Eigenschaft einer peelfähigen Polyesterfolie verstanden, dass sie nach Heißversiegelung direkt wieder von der Menüschale abgezogen werden kann, ohne dabei Ihre Peelfähigkeit zu verlieren. Bei der Herstellung von gesiegelten Packungen ist mit Ausschuss zu rechnen, z.B. eine mit Fehlern behaftete Siegelung. Vom Inspekteur an der Linie wird die fehlerbehaftete Schale dem Band entnommen und die peelfähige Polyesterfolie von der Menüschale abgezogen. Die Folie hat die Eigenschaft "reworkable" zu sein, wenn sie dabei komplett von der Schale abgezogen werden kann, ohne dabei einzureißen. Danach wird die Menüschale wieder - entweder mittels Handgerät versiegelt oder in die Linie zum Versiegeln gestellt. Der Vorgang geschieht bei Raumtemperatur der Maschinenhalle (4 bis 10 °C).

Integrität zu Wasser und zu Olivenöl. Die Folie zeigt die gewünschte Integrität, wenn sie den sogenannten Wasser- und Olivenöltest bestanden hat. Hierbei wird die Menüschale vor der Heißversiegelung derart mit Wasser oder Olivenöl gefüllt, dass beim senkrechten Hinstellen der versiegelten Menüschale auf die Sieglenaht eine etwa 3 cm hohe Flüssigkeitsschicht wirkt. Die Folie besteht diesen Test, wenn nach einer Lagerzeit (hochkant mit 3 cm Flüssigkeitssäule auf die Siegelschicht) von mindestens 14 Tagen keine Flüssigkeit ausgelaufen ist.

Zur Charakterisierung der Rohstoffe und der Folien wurden im Rahmen der vorliegenden Erfindung die folgenden Messmethoden benutzt:

**Siegelnahtfestigkeit (Bestimmung der Peel-Kraft)**

Zur Bestimmung der Siegelnahtfestigkeit wird ein Folienstreifen (100 mm lang x 15 mm breit) auf die Innenseite eines entsprechenden Streifens (dieser wird aus dem Boden der Menüschale herausgeschnitten) der APET/RPET -Menüschale gelegt und bei der eingestellten Temperatur von ≥ 110 °C, einer Siegelzeit von 0,5 s und einem "Siegeldruck" von 460N (Siegelgerät HSG/ET der Firma Brugger, einseitig beheizte Siegelbacke) gesiegelt. Entsprechend Figur 2 werden nach einer Zeit von ca. 2 h die gesiegelten Streifen in die Zugprüfmaschine (z.B. Zwick) eingespannt und die 180 °-Siegelnahtfestigkeit, d.h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z.B. 3 N/15mm).

**Bestimmung der Mindestsiegeltemperatur**

Mit dem Siegelgerät HSG/ET der Firma Brugger werden wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe einer einseitig beheizten Siegelbacke bei einem Siegeldruck von 460 N und einer Siegeldauer von 0,5 s gesiegelt wird. Die 180 ° Siegelnahtfestigkeit wurde wie bei der Bestimmung der Siegelnahtfestigkeit gemessen. Die Mindestsiegeltemperatur ist die Temperatur in °C, bei der eine Siegelnahtfestigkeit von mindestens **3 N/15mm** erreicht wird, wobei die Mindestsiegeltemperatur immer über 80 °C liegt.

**Glasübergangstemperaturen Tg**

Die Glasübergangstemperatur Tg wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang Tg als die Temperatur bei halber Stufenhöhe entnommen.

**Die Standardviskosität SV**

Die Standardviskosität in verdünnter Lösung SV wurde, angelehnt an DIN 53 728 Teil 3, in einem Ubbelohde Viskosimeter bei (25 $\pm$ 0,05) °C gemessen. Anstelle einer Mischung von Phenol und 1,2-Dichlorbenzol wurde Dichloressigsäure (DCE) als Lösemittel verwendet. Die Konzentration des gelösten Polymers betrug 1 g Polymer / 100 ml reines Lösemittel. Die Auflösung des Polymers erfolgte 1 Stunde bei 60 °C. Wurden die Proben nach dieser Zeit nicht vollständig gelöst, wurden noch bis zwei Auflösungsversuche jeweils 40 min bei 80 °C durchgeführt und die Lösungen anschließend 1 Stunde bei einer Drehzahl von 4100 min$^{-1}$ zentrifugiert. Aus der relativen Viskosität ($\eta_{rel}$ = $\eta$ /$\eta_s$) wird der dimensionslose SV-Wert wie folgt ermittelt

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert. D.h.:

$$Einwaage = (Einwaage\ entsprechend\ 100\%\ Polymer) / [(100\text{-}Partikelgehalt\ in\ Gew.\text{-}\%)/100)]$$

**Trübung, Clarity** und **Transparenz**

Die Messung an den beschichteten Polyesterfolien erfolgt am Hazegard Hazemeter XL-211 der Fa. BYK Gardner. Die Trübung nach Hölz wurde nach ASTM-D 1003-61, Methode 1, bestimmt. Die Messung der Clarity geschieht nach ASTM-D 1003 mittels Hazegard, jedoch jetzt am "clarity port" des Messgerätes. Die Messung der Transparenz geschieht nach ASTM-D 1033-77.

**Glanz 20°**

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20 ° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

**E-Modul**

Der E-Modul wird gemäß ISO 527-1 und ISO 527-3, Muster 2 Typ, Testgeschwindigkeit 100 %/min, 23 °C, 50 % r.h. bestimmt.

**Schrumpf**

Der Schrumpf der Folie wird nach DIN 40634 bei einer Temperatur von 150 °C und einer Schrumpfdauer von 15 min gemessen.

**Antifogeigenschaften**

Zur Bestimmung der Antifogeigenschaften wird 1 Tag nach Herstellung der peelfähigen Polyesterfolie zunächst die Oberflächenspannung der Siegelseite (A) in mN/m gemessen. Dies geschieht mit dem Krüss-Gerät DS 100 nach vorliegender Betriebsanleitung.

**Bestimmung der Antibeschlag-Wirkung**

Die Antibeschlag-Eigenschaften der Polyesterfolien wurden wie folgt bestimmt: In einem auf 23 °C und 50 % relative Luftfeuchtigkeit temperierten Labor wurden Folienmuster auf eine Menüschale (Länge ca. 17 cm, Breite ca. 12 cm, Höhe ca. 3 cm) aus amorphem PET, die ca. 50 ml Wasser enthielt, gesiegelt.

Die Schalen werden in einem auf 4 °C temperierten Kühlschrank gelagert und nach jeweils 10, 30 min, 4, 8 und 24 h zur Beurteilung entnommen. Die Kondensatbildung beim Abkühlen der 23 °C warmen Luft auf Kühlschranktemperatur wurde geprüft. Eine mit einem wirksamen Antibeschlag-Mittel ausgerüstete Folie ist auch nach der Kondensatbildung transparent, da das Kondensat beispielsweise einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.

Eine weitere Untersuchungsmethode ist der so genannte Heiß-Dampf- oder Hot-Fog-Test. Dazu wird ein 250 ml Becherglas, das 50 ml Wasser enthält und mit der zu prüfenden Folie bespannt ist, in ein auf 70 °C temperiertes Wasserbad gestellt. Die Beurteilung ist die gleiche wie oben beschrieben. Zusätzlich kann man mit diesem Test die Langzeit-Antibeschlag-Wirkung bzw. die Abwaschbeständigkeit der Folie prüfen, da der Dampf ständig an der Folie kondensiert und wieder abläuft oder abtropft. Leichtlösliche Substanzen werden so abgewaschen und die Antibeschlag-Wirkung lässt nach.

**Messung des mittleren Durchmessers $d_{50}$**

Die Bestimmung des mittleren Durchmessers $d_{50}$ wird mittels Malvern Master Sizer 2000 am einzusetzenden Partikel durchgeführt. Die Proben werden dazu in eine Küvette mit Wasser gegeben und diese dann in das Messgerät gestellt. Mittels Laser wird die Dispersion analysiert und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50% Ordinatenwertes mit der Summenkurve liefert auf der Abszissenachse den gewünschten $d_{50}$-Wert.

Messungen an der mittels dieser Partikel hergestellten Folie ergeben einen um 15 - 25 % niedrigeren $d_{50}$ Wert als die eingesetzten Partikel.

**Topographie (Weißlicht-Interferometrie)**

Die Topographie der Oberfläche wird mit einem Weißlicht-Interferometrie-Mikroskop der Firma Bruker, Typ Contour GT-K/A mit der Messsoftware Vision 64, Version 5.6, nach ISO 16610-19 (Welligkeitsfilterung) und ISO 25178-2 (Rauheitsparameter) bestimmt. Gemessen wird eine Fläche von 0,95 mm × 1,27 mm (480 × 640 Pixel) bei 5,1-facher optischer Vergrößerung. Die zu messende Folienoberfläche wird im Sputter Coater Polaron SC7680 mit einer Schicht von reinem Silber mit der Dicke von 10 nm senkrecht besputtert, um eine optimal reflektierende Schicht für die Messung der Oberflächentopographie zu erzeugen.

Zur Messung wird ein Folienstück von 10 × 10 cm Größe zwischen zwei Metallringen mit dem Durchmesser von 4 cm gespannt, so dass visuell keine Welligkeit der Folienprobe zu beobachten ist.

Die Messung erfolgt im VSI-Modus (vertical scanning interferometry). Alle Messparameter werden auf die mit der Software gelieferten Standardwerte gesetzt, mit folgenden Ausnahmen: Die Messlänge in z-Richtung (= Dickenrichtung der Folie) wird auf 25 $\mu$m (BackscanLength = 10 $\mu$m, ScanLength = 15 $\mu$m) festgelegt. Unter diesen Standardmessbedingungen (Vorschubgeschwindigkeit 1X, Modulation Threshold = 5%) beträgt der Anteil der unerkannten Pixel weniger als 10%. Fehlende Messwerte an den Flanken der Erhebungen werden rechnerisch ergänzt (Data Restore).

Sämtliche S-Parameter in der Folge werden aus der S-F Oberfläche gerechnet. $S_a$ ist der arithmetische Mittelwert der absoluten Ordinatenwerte innerhalb des Definitionsbereiches (A):

$$S_a = \frac{1}{A} \iint_A |z(x,y)| \, \mathrm{d}x \, \mathrm{d}y$$

Die reduzierte Spitzenhöhe $S_{pk}$ ist die mittlere Höhe der hervorstehenden Spitzen oberhalb des Kernes der Oberfläche. Die Rechenvorschriften für die $S_a$- und $S_{pk}$-Parameter sind in der Norm ISO 25178-2 angegeben.

Die $S_a$- und $S_{pk}$-Werte für eine Probe sind Mittelwerte von 5 zufällig gewählten unterschiedlichen Messstellen. Sollte auf einer Messstelle der $S_{pk}$-Wert größer als 800 nm sein, wird die Messung auf weiteren 5 zufällig gewählten Messstellen durchgeführt und alle die Messwerte für die Probe dann in die Mittelwerte gezogen.

## Adhesionstest

Aus der Folienbahn werden Folienmuster mit den Abmessungen 5 cm x 5 cm herausgeschnitten. Zwei dieser Folienmuster werden so aufeinandergelegt, dass die Seite (A) mit der Seite (C) in Berührung kommt. Auf dieses Folienpaar wird eine Trennschicht aus Papier gelegt. Fünf solcher Schichten (zwei peelfähigen Polyesterfolien, eine Papierschicht) werden zu einem Stapel zusammengefügt, in einen Wärmeofen gelegt und mit einem 10 kg Gewicht beschwert. Der Wärmeofen wurde zuvor auf die gewünschte Temperatur eingestellt (20 bis 100 °C). Der Stapel wird für die Zeit von 1ner Stunde im Wärmeofen gelagert und dann herausgeholt. Im direkten Anschluss daran (innerhalb einer Zeit von 1 h) wird jedes der 5 Paare zur Bestimmung der Adhesion im 180° Test (siehe Siegelnahtfestigkeit) entsprechend Figur 2 die aufeinanderliegenden Streifen in die Zugprüfmaschine (z.B. Zwick) eingespannt und die 180°-Siegelnahtfestigkeit, d.h. die zur Auftrennung der Prüfstreifen benötigte Kraft, mit einer Abzugsgeschwindigkeit von 200 mm/min bestimmt. Die Adhesionskraft zum Trennen der beiden Streifen wird in N pro 50 mm Folienstreifen angegeben (z.B. 0,05 N/50 mm).

Im Folgenden wird die Erfindung anhand von Beispielen näher erläutert.

## Beispiel 1

### I Herstellung der biaxial orientierten Polyesterfolie (BOPET)

Es wurde nach dem üblichen Verfahren (Längs-Quer-Verstreckung) eine biaxial orientierte Folie aus Polyethylenterephthalat mit einer Dicke von 23 $\mu$m hergestellt. Dazu wurden Chips aus Polyethylenterephthalat dem Extruder für die Basisschicht (B") zugeführt. Ebenfalls wurden Chips aus Polyethylenterephthalat und Partikel dem Extruder (Zweischneckenextruder) für die Schicht (B') zugeführt. Entsprechend den in untenstehender Tabelle aufgeführten Verfahrensbedingungen wurden die Rohstoffe in den beiden jeweiligen Extrudern aufgeschmolzen und homogenisiert.

Dann wurden durch Coextrusion in einer Dreischichtdüse die drei Schmelzeströme für die Schicht (B") und die beiden Schichten (B') übereinander geschichtet und über die Düsenlippe ausgestoßen. Der resultierende Schmelzfilm wurde abgekühlt und anschließend über eine stufenweise Orientierung in Längs- und Querrichtung eine transparente, dreischichtige Folie mit B'B"B'-Aufbau in einer Gesamtdicke von 23 $\mu$m hergestellt. Die Dicken der beiden Schichten (B') betragen jeweils 1 $\mu$m.

Die acrylisch vernetzte erfindungsgemäße Beschichtung (C) enthält eine 4,5 Gew.-%ige Lösung eines Latex, bestehend aus einem Copolymeren aus 60 Gew.-% Methylmethacrylat, 35 Gew.-% Ethylacrylat und 5 Gew.-% N-Methylolacrylamid und einem Tensid. Die Beschichtung (C) wurde auf eine der Schichten (B') der längsgestreckten Folie aufgebracht, die dazu unmittelbar zuvor auf dieser Seite mittels Corona behandelt wurde. Die Folie wurde mit dem Reversgravurverfahren mit der zuvor beschriebenen Dispersion beschichtet, wobei das Trockengewicht der Beschichtung (bezogen auf die biaxial orientierte Folie) ca. 0,035 g/m$^2$ betrug.

Coextrudierte Basisschicht (B"):

100 Gew.-% PET mit einem SV-Wert von 800

Beide coextrudierte Schichten (B'), Mischung aus:

85 Gew.-% PET mit einem SV-Wert von 790

15 Gew.-% Masterbatch aus 99 Gew.-% PET (SV-Wert: 790) und 1,0 Gew.-% Sylobloc 44 H (synthetisches $SiO_2$), $d_{50}$ = 2,5 $\mu$m

Die Herstellungsbedingungen in den einzelnen Verfahrensschritten waren

| Extrusion | Temperaturen für B'- und B"-Schicht | 280 | °C |
|---|---|---|---|
| | Temperatur der Abzugswalze | 20 | °C |
| Längsstreckung (NTEP) | Aufheiztemperatur<br>Strecktemperatur | 70-120<br>115 | °C<br>°C |
| | Längsstreckverhältnis (LOE = 1,7 und REP = 2,65) | 4,5 | |
| Querstreckung | Aufheiztemperatur | 100 | °C |
| | Strecktemperatur | 135 | °C |
| | Querstreckverhältnis | 4,0 | |
| Fixierung | Temperatur | 230 | °C |
| | Dauer | 3 | s |

**II Herstellung der offline beschichteten peelfähigen Polyesterfolie**

Die BOPET-Folie wurde offline mit einer Peel-Beschichtungszusammensetzung zur Bildung der Deckschicht (A) gemäß untenstehender Angaben mit einer Gravurwalze (forward gravure) beschichtet. Danach erfolgte eine Glättung der Deckschicht (A) mittels "smoothing bar". Der smoothing bar wurde mit einer Geschwindigkeit betrieben, die 100 % der Folienbahngeschwindigkeit entspricht, die aber entgegengesetzt gerichtet ist. Die Trockenmasse (= Deckschicht (A)) betrug 2,5 g/m$^2$.

Beschichtungszusammensetzung (vgl. dazu auch Tabelle 2):

27,8 Gew.-%      Polyester (30 Mol-% DMT-, 40 Mol-% DMI- und 30 Mol-% Sebazat-Einheiten und aus 44 Mol-% EG-, 56 Mol-% Neopentylglycol).

0,2 Gew.-%      Sylysia 430 (synthetisches $SiO_2$, Fuji, Japan) mit einem Partikeldurchmesser von $d_{50}$ = 3,4$\mu$m

2 Gew.-%      Antifogmittel: Diethylsulfosuccinat Natriumsalz (Lutensit A BO BASF SE)

70 Gew.-%      Ethylacetat

Der $T_g$ des Peelpolyesters liegt bei 11 °C und der SV-Wert des Peelpolyesters liegt bei 500. Die Viskosität des Lackes betrug 25 s und die Temperatur des Lackes betrug 19,5 °C. In Tabelle 2 sind die jeweiligen Anteile der im Peelpolymer enthaltenen Dicarbonsäuren und Glykole in Mol-%, sowie weitere Informationen zur erfindungsgemäßen Folie angegeben.

In Tabelle 3 sind die Eigenschaften der Folie dargestellt. Laut Messungen (Spalte 2), beträgt die Mindestsiegeltemperatur der Folie gegenüber APET- und RPET-Menüschalen 120 °C. Die Folie wurde bei 120, 130, 140 und 150 °C gegen APET-Menüschalen (Hersteller Fa. Faerch K2171-1A tansparent), gesiegelt (Siegeldruck 460 N, Siegelzeit 0,5 s). Anschließend wurden Streifen des Verbundes aus erfindungsgemäßer Folie und APET- Menüschale mittels Spannungs-Dehnungstester entsprechend der vorgenannten Messvorschrift auseinander gezogen. Für alle Siegeltemperaturen zeigte sich das gewünschte Abschälen der Folien von der Menüschale gemäß Figur 3, Polymer 2. Die gemessenen Siegelnahtfestigkeiten sind in Spalte 3 gelistet. Für alle Siegeltemperaturen wurden peelfähige Folien erhalten: Auch das so wichtige Cold-Peel-Verhalten war einwandfrei. Die Siegelnahtfestigkeiten liegen mit knapp 5 N/15mm im mittleren Bereich, d.h., dass sich die Folien mit kontrollierter Kraftanstrengung von der Menüschale abziehen lassen (= medium peel). Weiterhin hatte die Folie die geforderten guten optischen Eigenschaften, zeigte das gewünschte Handling, das gewünschte Verarbeitungsverhalten, insbesondere das gewünschte Wickelverhalten.

Zur weiteren Untersuchung des Wickelverhaltens wurde an der Folie der Adhesionstest im Bereich bis zu 100 °C Ofentemperatur durchgeführt. Der Adhesionstest ergab für alle Ofentemperaturen einen Wert von kleiner 0,1 N/50 mm.

**Beispiel 2**

Im Vergleich zu Beispiel 1 wurde die Trockenmasse der siegelfähigen Schicht (A) auf 4,5 g/m$^2$ bei sonst identischem Folienaufbau und sonst identischer Herstellungsweise angehoben. Die Mindestsiegeltemperatur der Folie gegenüber APET- und RPET-Menüschalen beträgt jetzt 111 °C. Für alle Siegeltemperaturen zeigte sich das gewünschte Abschälen der Folien von der Menüschale gemäß Figur 3, Polymer 2. Die gemessenen Siegelnahtfestigkeiten sind in Spalte 3 gelistet. Für alle Siegeltemperaturen wurden wiederum peelfähige, d.h. auch coldpeel- fähige Folien erhalten. Die Siegelnahtfestigkeiten der erfindungsgemäßen Folien sind deutlich höher als im Beispiel 1. Es wurde eine etwas höhere Trübung der Folie gemessen; das Handling und das Wickelverhalten der Folie war wie in Beispiel 1. Der Adhesionstest ergab für alle Ofentemperaturen ebenfalls einen Wert von kleiner 0,1 N/50 mm. Die peelfähige Polyesterfolie nach diesem Beispiel hat den Vorteil, dass hiermit auch durch schwer siegelbaren Menüschalen gesiegelt werden kann, die insbesondere bei RPET-Menüschalen anzutreffen sind.

**Beispiel 3**

Im Vergleich zu Beispiel 1 wurde bei sonst identischem Folienaufbau die Zusammensetzung des Lackes für die siegelfähige Deckschicht (A) geändert. Der Lack besteht jetzt aus den folgenden Rohstoffanteilen

| | |
|---|---|
| 27,8 Gew.-% | Polyester (45 Mol-% DMT-, 32 Mol-% DMI-, 10 Mol-% Sebazat - und 13 Mol-% Adipatat-Einheiten und aus 35 Mol-% EG-, 25 Mol-% DEG-, 15 Mol-% PD-, 6 Mol-% BD- und 19 Mol-% Neopentylglycol-Einheiten). |
| 0,2 Gew.-% | Sylysia 430 (synthetisches $SiO_2$, Fuji, Japan) mit einem Partikeldurchmesser von $d_{50}$ = 3,4$\mu$m |
| 2 Gew.-% | Antifogmittel, Lutensit A BO BASF SE |
| 70 Gew.-% | Ethylacetat |

Die Mindestsiegeltemperatur der Folie gegenüber APET-Menüschalen beträgt 113 °C. Für alle Siegeltemperaturen zeigte sich das gewünschte Abschälen der Folien von der Menüschale gemäß Figur 3, Polymer 2. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind höher als im Beipiel 1. Sie liegen in einem mittleren Bereich, so dass sich die Folie ohne wesentliche Kraftanstrengung von der Menüschale abziehen lässt. Das Handling, das Verarbeitungsverhalten und insbesondere das Wickelverhalten der Folie war wie in Beipiel 1.

**Vergleichsbeispiel 1**

Es wurde das Beispiel 1 aus der EP 1 475 228 B1 nachgearbeitet. In Tabelle 3 sind die Eigenschaften der Folie dargestellt. Obwohl die Folie hochpigmentiert ist und die Pigmente Schwachstellen in der Siegelschicht darstellen, wurde für keine der angegebenen Siegeltemperaturen eine peelfähige Folie erhalten. Beim Abziehen der Folie von der Menüschale riss die Folie ein und zeigte ein Kraft-Weg-Diagramm gemäß Figur 3, Polymer 1. Die Folie zeigt "weldable" Verhalten und ist damit für die Lösung der Aufgabe ungeeignet.

**Vergleichsbeispiel 2**

Es wurde das Beispiel 1 aus der EP 2 431 176 B1 nachgearbeitet. Die Folie wurde bei 120 °C gegen APET-Menüschalen (Hersteller Fa. Faerch K2171-1A tansparent), gesiegelt (Siegeldruck 460 N, Siegelzeit 0,5 s). Anschließend wurden Streifen des Verbundes aus Folie und APET-Menüschale mittels Spannungs-Dehnungstester entsprechend der vorgenannten Messvorschrift auseinander gezogen. Es zeigte sich nicht das gewünschte gewünschte Peelverhalten, die Peelkraft war mit 2,1 N/15mm zu gering.

**Vergleichsbeispiel 3**

Im Vergleich zu Beispiel 1 wurde eine peelfähige Polyesterfolie ohne die acrylisch venetzte Beschichtung (C) hergestellt. Bei der Aufrollung der beschichteten Folie und nachfolgendem Probeabziehen der peelfähigen Polyesterfolie von der Rolle wurde ein Abrollgeräusch festgestellt. Nach Transport und Lagerung der Masterrolle (bei erhöhten Temperaturen, bis 50 °C) wurde diese in kleine Schnittrollen geschnitten. Dabei wurde beim Abrollen der Folie von der Masterrolle eine verstärkte Haftung der Folienlagen untereinander beobachtet. Durch die große Haftung zwischen den einzelnen Folienlagen kam es zu Folienabrissen in der Maschine, was zum Abbruch der Schneidoperation führt. Das Wickelverhalten der peelfähigen Polyesterfolie ist ungenügend und entspricht nicht den Erfordernissen. Unabhängig hiervon wurde beim Adhesionstest für Ofentemperaturen größer/gleich 60 °C einen Wert von größer 0,1 N/50 mm festgestellt.

## Tabelle 2

| | | Zusammensetzung Polyester zur Bildung von Deckschicht (A) | | | | | | | | | | Glastemperatur Polyester | SV-Wert Polyester | Folienaufbau | Folien-dicke, ca. | Masse d. Deckschicht (A) | Antifogmittel und Konzentration in Schicht (A) | Partikel in B' der biaxial orientierten Polyesterfolie | |
|---|---|---|---|---|---|---|---|---|---|---|---|---|---|---|---|---|---|---|---|
| | | Dicarbonsäuren | | | | | Diole | | | | | | | | | | | | |
| | | DMT | DMI | AzS | SeS | AdS | 1,2-EG | DEG | PD | BD | NG | | | | | | | Durch-messer | Konzen-tration |
| | | Mol-% | | | | | Mol-% | | | | | °C | | | µm | g/m² | | µm | Gew.-% |
| Beispiele | 1 | 30 | 40 | | 30 | | 44 | | | | 56 | 11 | 500 | ABC* (Beschichtet) | 25 | 2,5 | Lutensit A BO BASF SE/2 | 3,4 | 0,20 |
| | 2 | 30 | 40 | | 30 | | 44 | | | | 56 | 11 | 500 | ABC* (Beschichtet) | 25 | 4,5 | Lutensit A BO BASF SE/2 | 3,4 | 0,20 |
| | 3 | 45 | 32 | | 10 | 13 | 35 | 25 | 15 | 7 | 18 | 12 | 500 | ABC* (Beschichtet) | 25 | 2,5 | Lutensit A BO BASF SE/2 | 3,4 | 0,20 |
| Vergl.-Beispiel | 1 | | | | | | | | | | | 75 | | ABC** (Koex.) | 25 | 1 | | 3,4 | 5 |
| | 2 | 45 | - | 55 | - | | 100 | | | | | -15 | | AB** (Koex.) | 25 | | | | |

**Abkürzungen:**
DMT Dimethylterephthalat, DMI Dimethylisophthalat, EG Ethandiol, DEG Diethylenglycol, PD Propandiol, BD Butandiol, NG Neopentylglycol, AzS Azelat, SeS Sebazat, AdS Adipat

\* Die Sichten A und C stellen Beschichtungen dar und wurden über ein offline bzw. inline Beschichtungsverfahren aufgetragen.

\*\* Die Sichten A und C stellen Deckschichtenmodifikationen einer koextrudierten, biaxial orientierten ABC-, bzw. AB-Polyesterfolie dar.

## Tabelle 3

| | | Mindest siegel temperatur | Sieglenahtfestigkeit gegenüber APET-Menüschalen bei Temperatur in °C | | | | Cold-peel and Reworkabi lty | Trübung | Clarity | Glanz | | Trans parenz | arithmetischer Mittelwert der absoluten Ordinatenwerte Sa | | Reduzierte Spitzenhöhe Spk | E-Modul | Schrumpf | Antifog-verhalten | Wasser- und Olivenöltest | Wickelverh alten |
|---|---|---|---|---|---|---|---|---|---|---|---|---|---|---|---|---|---|---|---|---|
| | | | 120 | 130 | 140 | 150 | | | | A-Seite | B-Seite | | A-Seite | C-Seite | A-Seite | | | | | |
| | | °C | N/15mm | | | | | % | % | | | % | nm | | nm | N/mm$^2$ | % | | | |
| Beispiele | 1 | 120 | 4,2 | 4,7 | 5,2 | 4,8 | ++++ | 11 | 92 | 75 | 130 | 90,5 | 135 | 60 | 551 | 4500 | 2,1 | gut-bestanden | bestanden | sehr gut |
| | 2 | 116 | 4,9 | 5,7 | 5,8 | 5,8 | ++++ | 12 | 91 | 74 | 130 | 90,2 | 175 | 60 | 581 | 4300 | 2,1 | gut-bestanden | bestanden | sehr gut |
| | 3 | 113 | 5 | 5,2 | 5,7 | 5,6 | ++++ | 10 | 91 | 79 | 130 | 90,8 | 136 | 60 | 551 | 4600 | 2,1 | gut-bestanden | bestanden | sehr gut |
| V- Beispiel | 1 | 130 | 1,7 | 2,5 | 5 | 8 | - | 23 | 85 | 55 | 130 | | 310 | 60 | | | | | | gut |
| | 2 | 120 | 1,7 | 2,1 | 2,2 | 2 | | | | | | | | | | | | | | gut |

Coldpeel ++++ Bei allen Siegeltemperaturen wird Folie von der Menüschale "gepeelt", ohne dass dabei die Folie ein- oder weiterreißt. Einwandfreies, sattes, sauberes Peelen der Folie von Menüschale, auch im oberen Temperaturbereich bei hoher Siegelnahtfestigkeit (medium peel).

    - Bei allen Siegeltemperaturen reißt Folie beim Abziehen von der Meüschale ein.

**Patentansprüche**

1. Transparente peelfähige Polyesterfolie umfassend eine biaxial orientierte Polyesterfolie (B), die eine erste und eine zweite Oberfläche aufweist, eine weitere, auf der ersten Oberfläche der Basisschicht (B) aufgebrachte Schicht (C) und eine auf der zweiten Oberfläche der Basisschicht (B) aufgebrachte heißsiegelbare und gegenüber APET- und RPET- Menüschalen peelfähige Deckschicht (A), wobei die heißsiegelbare und peelfähige Deckschicht (A) eine offline Beschichtung darstellt und aus

   (a) 85 - 99 Gew.-% Polyester und
   (b) 1 - 15 Gew.-% weiteren Substanzen besteht, wobei

   der Polyester aus 25-95 Mol-% an Einheiten aufgebaut ist, die auf mindestens eine aromatische Dicarbonsäure und 5-75 Mol-% an Einheiten, die auf mindestens eine aliphatische Dicarbonsäure zurückgehen, wobei die Summe der dicarbonsäureabgeleiteten Molprozente 100 ergibt und
   der Polyester aus mindestens 10 Mol-% an Einheiten aufgebaut ist, die auf lineare oder verzweigte Diole mit größer als 2 C-Atomen zurückgehen, wobei die Summe der Diol-Komponenten 100 Molprozente ergibt und
   die Schicht (C) vernetzte Acrylat- und/oder Methacrylat- basierte Copolymere umfasst und die Folie eine Siegelanspringtemperatur (= Mindestsiegeltemperatur) gegenüber APET- und RPET- Menüschalen von nicht mehr als 115°C und eine max. Siegeltemperatur von ca. 160°C besitzt.

2. Polyesterfolie nach Anspruch 1, **dadurch gekennzeichnet, dass** die weiteren Substanzen der Deckschicht (A) ausgewählt sind aus der Gruppe bestehend aus: Partikeln, Additiven, Hilfsmitteln, Gleitmittel, Antifogmittel und Mischungen derselben.

3. Polyesterfolie nach Anspruch 1 oder 2, **dadurch gekennzeichnet, dass** die Folie eine Siegelanspringtemperatur (= Mindestsiegeltemperatur) gegenüber APET- und RPET-Menüschalen von nicht mehr als 112°C und eine Siegelnahtfestigkeit (=Peel-Kraft) gegenüber APET- und RPET - Menüschalen von mindestens 3,0 N besitzt.

4. Polyesterfolie nach Anspruch 1, 2 oder 3, **dadurch gekennzeichnet, dass** die Peel-Kraft F gegenüber APET- und RPET - Menüschalen mit der Siegeltemperatur $\vartheta$ (in °C) nach folgender Formel korreliert:

$$0,018 \bullet \vartheta \, / \, °C + 1,0 \leq Peelkraft \quad F \, / \, N \; je \, 15 \, mm \; \leq 0,03 \bullet \vartheta \, / \, °C + 2,5 \, .$$

5. Polyesterfolie nach einem der Ansprüche 1 bis 4, **dadurch gekennzeichnet, dass** der peelfähige Polyester der Deckschicht (A) die folgenden, von Dicarbonsäure abgeleiteten Einheiten und von Diol abgeleiteten Einheiten, jeweils bezogen auf die gesamte Menge an Dicarbonsäure-basierten - bzw. Diol-basierten Wiederholungseinheiten enthält:

   • 25 bis 85 Mol-% Terephthalat,
   • 5 bis 50 Mol-% Isophthalat,
   • 5 bis 50 Mol-% Adipat,
   • 0 bis 30 Mol -% Azelat,
   • 5 bis 50 Mol-% Sebazat,
   • Mehr als 10 Mol -% Ethylenglykol
   • Mehr als 10 Mol.-% eines oder mehrerer Diole ausgewählt aus der Gruppe bestehend aus: $C_3$ bis $C_7$ -Diolen, Di-, Tri- oder Tetra-$C_2$ bis $C_4$-Alkylen-Glykolen.

6. Polyesterfolie nach einem der Ansprüche 1 bis 5, **dadurch gekennzeichnet, dass** die Glasübergangstemperatur des peelfähigen Polyesters der Deckschicht (A) zwischen 0 und 30 °C liegt.

7. Polyesterfolie nach einem der Ansprüche 1 bis 6, **dadurch gekennzeichnet, dass** der SV-Wert des peelfähigen Polyesters der Deckschicht (A) zwischen 200 und 2000 liegt.

8. Polyesterfolie nach einem der Ansprüche 1 bis 7, **dadurch gekennzeichnet, dass** die Deckschicht (A) ein oder mehrere anionische Tenside als Antifogmittel in einer Gesamtkonzentration von 0,01-5 Gew.-% enthält.

**9.** Polyesterfolie nach einem der Ansprüche 1 bis 8, **dadurch gekennzeichnet, dass** die Basisschicht (B) mehrschichtig ist mit einem Aufbau B'B"B' oder B'B"B"'.

**10.** Polyesterfolie nach einem der Ansprüche 1 bis 9, **dadurch gekennzeichnet, dass** die Gesamtdicke der peelfähigen Polyesterfolie 3 bis 200 μm beträgt, wobei die Basisschicht (B) einen Anteil von 45 bis 97 % an der Gesamtdicke hat.

**11.** Verfahren zur Herstellung einer Polyesterfolie nach Anspruch 1, **dadurch gekennzeichnet, dass** ein Polymer für die Basisschicht (B), die eine erste und eine zweite Oberfläche aufweist, oder mehrere Polymere für die einzelnen Schichten B', B" und B"' oder B', B" und B' der Basisschicht (B) in einem oder mehreren Extrudern aufgeschmolzen wird/werden, in einer Ein- oder Mehrschichtdüse zu einem flachen Schmelzfilm ausgeformt wird/werden, der anschließend mit Hilfe einer Kühlwalze abgezogen , biaxial gestreckt, thermofixiert und aufgerollt wird, wobei die biaxiale Steckung eine Längsstreckung und eine Querstreckung umfasst, und wobei an die erste Oberfläche der Basisschicht (B) offline mittels üblicher Beschichtungstechnologie eine Peel-Beschichtungszusammensetzung zur Bildung der Deckschicht (A) nass angetragen und getrocknet wird und die so erhaltene Folie dann wieder aufgewickelt wird, wobei zur Bildung der Schicht (C)

(a) zwischen der Längsstreckung und der Querstreckung eine Beschichtungszusammensetzung zur Bildung der Schicht (C) inline nass an die zweite Oberfläche der Basisschicht (B) angetragen wird, oder
(b) vor oder nach der offline Beschichtung mit der Deckschicht (A) eine Beschichtungszusammensetzung zur Bildung der Schicht (C) offline mittels üblicher Beschichtungstechnologie an die zweiter Oberfläche der Basisschicht nass angetragen wird.

**12.** Verfahren nach Anspruch 11, **dadurch gekennzeichnet, dass** die Temperatur der Peel-Beschichtungszusammensetzung (gemessen in der Wanne und im Zulaufbehälter) 10 bis 40 °C beträgt.

**13.** Verfahren nach Anspruch 11 oder 12, **dadurch gekennzeichnet, dass** die Viskosität der Peel-Beschichtungszusammensetzung - gemessen in der Wanne und im Zulaufbehälter mittels Auslaufbecher nach der Zahn 2-Methode - 10 bis 50 s beträgt.

**14.** Verwendung einer Polyesterfolie nach einem der Ansprüche 1 bis 10 als Siegelfolie.

**15.** Verwendung nach Anspruch 14 als Siegelfolie für APET- und/oder RPET-Menüschalen.

**Claims**

**1.** Transparent peelable polyester film comprising a biaxially oriented polyester film (B) which has a first and a second surface, and comprising, applied on the first surface of the base layer (B), a further layer (C), and comprising, applied on the second surface of the base layer (B), a heat-sealable outer layer (A) that is peelable in relation to ready-meal trays made of APET and made of RPET, where the heat-sealable and peelable outer layer (A) is an off-line coating and consists of

(a) from 85 to 99 % by weight of polyester and
(b) from 1 to 15 % by weight of other substances, where the polyester is composed of from 25 to 95 mol % of units derived from at least one aromatic dicarboxylic acid and from 5 to 75 mol % of units derived from at least one aliphatic dicarboxylic acid, where the sum of the dicarboxylic-acid-derived molar percentages is 100 and

the polyester is composed of at least 10 mol % of units derived from linear or branched diols having more than 2 carbon atoms, where the entirety of the diol components provides 100 molar per cent and
the layer (C) comprises crosslinked acrylate- and/or methacrylate-based copolymers and the minimal sealing temperature of the film in relation to ready-meal trays made of APET and made of RPET is not above 115 °C and the maximal sealing temperature of the film is about 160 °C.

**2.** Polyester film according to Claim 1, **characterized in that** the other substances of the outer layer (A) are selected from the group consisting of: particles, additives, auxiliaries, lubricant, antifogging agent and mixtures of the same.

**3.** Polyester film according to Claim 1 or 2, **characterized in that** the minimal sealing temperature of the film in relation to ready-meal trays made of APET and made of RPET is not above 112 °C and the seal seam strength (= peel force) of the film in relation to ready-meal trays made of APET and made of RPET is at least 3.0 N.

4. Polyester film according to Claim 1, 2 or 3, **characterized in that** the following formula relates the peel force F in relation to ready-meal trays made of APET and made of RPET to the sealing temperature $\vartheta$ (in °C):

$$0.018 \cdot \vartheta/°C + 1.0 \leq peel\ force\ F/N\ per\ 15\ mm \leq 0.03 \cdot \vartheta/°C + 2.5.$$

5. Polyester film according to any of Claims 1 to 4, **characterized in that** the peelable polyester of the outer layer (A) comprises the following dicarboxylic-acid-derived units and diol-derived units, based in each case on the total quantity of dicarboxylic-acid-based and, respectively, diol-based repeat units:

   • from 25 to 85 mol % of terephthalate,
   • from 5 to 50 mol % of isophthalate,
   • from 5 to 50 mol % of adipate,
   • from 0 to 30 mol % of azelate,
   • from 5 to 50 mol % of sebacate,
   • more than 10 mol % of ethylene glycol,
   • more than 10 mol % of one or more diols selected from the group consisting of: $C_3$ to $C_7$ diols, and di-, tri- or tetra-$C_2$ to $C_4$ alkylene glycols.

6. Polyester film according to any of Claims 1 to 5, **characterized in that** the glass transition temperature of the peelable polyester of the outer layer (A) is from 0 to 30 °C.

7. Polyester film according to any of Claims 1 to 6, **characterized in that** the SV value of the peelable polyester of the outer layer (A) is from 200 to 2000.

8. Polyester film according to any of Claims 1 to 7, **characterized in that** the outer layer (A) comprises one or more anionic surfactants as antifogging agents in a total concentration of from 0.01 to 5 % by weight.

9. Polyester film according to any of Claims 1 to 8, **characterized in that** the base layer (B) has a plurality of layers with a structure B'B"B' or B'B"B"'.

10. Polyester film according to any of Claims 1 to 9, **characterized in that** the total thickness of the peelable polyester film is from 3 to 200 $\mu$m, where the proportion of the base layer (B), based on the total thickness, is from 45 to 97 %.

11. Process for the production of a polyester film according to Claim 1, **characterized in that** a polymer for the base layer (B), which has a first and a second surface, or a plurality of polymers for the individual layers B', B" and B"' or B' , B" and B' of the base layer (B) is/are melted in one or more extruders, and is/are shaped in a single-layer die or coextrusion die to give a flat melt film, which is then drawn off with the aid of a chill roll, biaxially stretched, heat-set and rolled up, where the biaxial stretching comprises longitudinal stretching and transverse stretching, and where, to form the outer layer (A), a peel-coating composition is applied in liquid form to the first surface of the base layer (B) off-line by means of conventional coating technology, and is dried, and the resultant film is then again wound up, where the layer (C) is formed by

    (a) applying, between the longitudinal stretching and the transverse stretching, a coating composition in-line in liquid form to the second surface of the base layer (B) to form the layer (C), or
    (b) applying, before or after the off-line coating with the outer layer (A), a coating composition in liquid form off-line to the second surface of the base layer by means of conventional coating technology, to form the layer (C).

12. Process according to Claim 11, **characterized in that** the temperature of the peel-coating composition (measured in the trough and in the feed container) is from 10 to 40 °C.

13. Process according to Claim 11 or 12, **characterized in that** the viscosity of the peel-coating composition - measured in the trough and in the feed container by means of flow cup in accordance with the Zahn method No. 2 - is from 10 to 50 s.

**14.** Use of a polyester film according to any of Claims 1 to 10 as sealable film.

**15.** Use according to Claim 14 as sealable film for ready-meal trays made of APET and/or made of RPET.

**Revendications**

**1.** Film polyester pelable transparent comprenant un film polyester (B) biaxialement orienté, qui présente une première et une seconde surface, une autre couche (C) apposée sur la première surface de la couche de base (B) et une couche supérieure (A) thermoscellable apposée sur la seconde surface de la couche de base (B) et pelable par rapport à des plateaux-repas APET et RPET, dans lequel la couche supérieure (A) thermoscellable et pelable présente un revêtement hors ligne et consiste en

(a) 85 à 99 % en poids de polyester et
(b) 1 à 15 % en poids d'autres substances, dans lequel

le polyester est construit à partir de 25 à 95 % en mole d'unités qui dérivent d'au moins un acide dicarboxylique aromatique et 5 à 75 % en mole d'unités qui dérivent d'au moins un acide dicarboxylique aliphatique, dans lequel la somme des pourcentages molaires dérivés des acides dicarboxyliques donne 100 et le polyester est construit à partir d'au moins 10 % en mole d'unités qui dérivent de diols linéaires ou ramifiés dotés de plus de 2 atomes de C, dans lequel la somme des pourcentages molaires des composants diol donne 100 et la couche (C) comprend des copolymères réticulés à base d'acrylate et/ou de méthacrylate et le film possède une température d'amorçage de soudage (= température de soudage minimale) par rapport à des plateaux-repas APET et RPET de pas plus de 115°C et une température de soudage maximale d'environ 160 °C.

**2.** Film polyester selon la revendication 1, **caractérisé en ce que** les autres substances de la couche supérieure (A) sont choisies à partir du groupe consistant en : des particules, des additifs, des adjuvants, des lubrifiants, des agents antibuée et des mélanges de ceux-ci,

**3.** Film polyester selon la revendication 1 ou 2, **caractérisé en ce que** le film possède une température d'amorçage de soudage (= température de soudage minimale) par rapport à des plateaux-repas APET et RPET de pas plus de 112 °C et une résistance du cordon de soudure (= force de pelage) par rapport à des plateaux-repas APET et RPET d'au moins 3,0 N.

**4.** Film polyester selon la revendication 1, 2 ou 3, **caractérisé en ce que** la force de pelage F par rapport à des plateaux-repas APET et RPET coïncide avec la température de soudage $\vartheta$ (en °C) selon la formule suivante :

$$0{,}018 \cdot \vartheta \, / \, °C + 1{,}0 \le \textit{force de pelage F / N par } 15mm \le 0{,}03 \cdot \vartheta \, / \, °C + 2{,}5.$$

**5.** Film polyester selon l'une quelconque des revendications 1 à 4, **caractérisé en ce que** le polyester pelable de la couche supérieure (A) contient les unités dérivées d'acide dicarboxylique et les unités dérivées de diol suivantes, respectivement exprimées sur la base de la quantité totale d'unités répétitives à base d'acide dicarboxylique ou de diol :

• 25 à 85 % en mole de téréphtalate,
• 5 à 50 % en mole d'isophtalate,
• 5 à 50 % en mole d'adipate,
• 0 à 30 % en mole d'azélate,
• 5 à 50 % en mole de sébazate,
• Plus de 10 % en mole d'éthylène glycol
• Plus de 10 % en mole d'un ou plusieurs diol(s) choisi(s) dans le groupe consistant en : diols en $C_3$ à $C_7$, di-, tri- ou tétra-alkylène glycols en $C_2$ à $C_4$.

**6.** Film polyester selon l'une quelconque des revendications 1 à 5, **caractérisé en ce que** la température de transition vitreuse du polyester pelable de la couche supérieure (A) se situe entre 0 et 30 °C.

**7.** Film polyester selon l'une quelconque des revendications 1 à 6, **caractérisé en ce que** la valeur SV du polyester pelable de la couche supérieure (A) se situe entre 200 et 2 000.

**8.** Film polyester selon l'une quelconque des revendications 1 à 7, **caractérisé en ce que** la couche supérieure (A) contient un ou plusieurs tensioactifs anioniques en tant qu'agent antibuée en une concentration totale de 0,01 à 5 % en poids.

**9.** Film polyester selon l'une quelconque des revendications 1 à 8, **caractérisé en ce que** la couche de base (B) est multicouche avec une structure B'B"B' ou B'B"B'".

**10.** Film polyester selon l'une quelconque des revendications 1 à 9, **caractérisé en ce que** l'épaisseur totale du film polyester pelable est de 3 à 200 μm, dans lequel la couche de base (B) correspond à une proportion de 45 à 97 % de l'épaisseur totale.

**11.** Procédé de fabrication d'une couche polyester selon la revendication 1, **caractérisé en ce qu'**un polymère pour la couche de base (B), qui présente une première et une seconde surface, ou plusieurs polymères pour les couches individuelles B', B" et B'" ou B', B" et B' de la couche de base (B), est/sont fondu(s) dans une ou plusieurs extrudeuses, est/sont réalisé(s) sous la forme d'un film fondu plat dans une buse unicouche ou multicouche, qui est ensuite retiré à l'aide d'un rouleau de refroidissement, étiré biaxialement, thermofixé et enroulé, dans lequel l'étirement biaxial présente un allongement longitudinal et un allongement transversal, et dans lequel une composition de revêtement pelable est appliquée hors ligne et de manière humide pour la formation de la couche de supérieure (A) au moyen d'une technologie d'enduction habituelle au niveau de la première surface de la couche de base (B) et est séchée et le film ainsi obtenu est ensuite réenroulé, dans lequel pour former la couche (C)

(a) entre l'allongement longitudinal et l'allongement transversal, une composition de revêtement est appliquée en ligne et de manière humide au niveau de la seconde surface de la couche de base (B) pour former la couche (C), ou
(b) avant ou après le revêtement hors ligne avec la couche supérieure (A), une composition de revêtement est appliquée pour la formation de la couche (C) hors ligne et de manière humide au moyen d'une technologie d'enduction habituelle au niveau de la seconde surface de la couche de base.

**12.** Procédé selon la revendication 11, **caractérisé en ce que** la température de la composition de revêtement à peler (mesurée dans la cuve et dans le réservoir d'entrée) est de 10 à 40°C.

**13.** Procédé selon la revendication 11 ou 12, **caractérisé en ce que** la viscosité de la composition de revêtement à peler - mesurée dans la cuve et dans le réservoir d'entrée au moyen d'une coupe consistométrique selon le second procédé de Zahn - est de 10 à 50 s.

**14.** Utilisation d'un film polyester selon l'une quelconque des revendications 1 à 10 en tant que film de scellage.

**15.** Utilisation selon la revendication 14 en tant que film de scellage pour des plateaux-repas APET et/ou RPET.

# Fig. 1

# Fig. 2

Länge L in cm

## Fig. 3

## Fig. 4

## Fig. 5

## Fig. 6

# Fig. 7

# Fig. 8

## Fig. 9

3000.000nm

-1000.000nm

0.315

0.631

0.946

1.262 mm

## Fig. 10

(a)

(b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1475228 B1
- WO 2015148685 A1
- WO 2016083521 A1
- EP 2431176 B1
- EP 1529798 A

**In der Beschreibung aufgeführte Nicht-Patentliteratur**

- **M. LAKE.** Oberflächentechnik in der Kunststoffver-arbeitung. *Hanser,* 2009
- **E. DÖRSAM.** Printing Technology for Electronics, 4. Ink Transfer in the Printing Process. *Technische Universität Darmstadt, Sommersemester 2012,* 01. Juni 2012
- **E. DÖRSAM.** *Wesentlichen durch Farbspaltung,* 2012
- **AHLHAUS, O.E.** Verpackung mit Kunststoffen. Carl Hanser Verlag, 1997, 271